(19) **Europäisches Patentamt / European Patent Office / Office européen des brevets**

(11) **EP 4 166 380 A1**

(12) # EUROPEAN PATENT APPLICATION
published in accordance with Art. 153(4) EPC

(43) Date of publication:
**19.04.2023 Bulletin 2023/16**

(21) Application number: **21841291.4**

(22) Date of filing: **13.07.2021**

(51) International Patent Classification (IPC):
**B60L 53/66** (2019.01)  **B60L 53/62** (2019.01)
**B60L 58/12** (2019.01)  **H02J 50/10** (2016.01)
**H02J 50/80** (2016.01)  **H02J 7/00** (2006.01)

(52) Cooperative Patent Classification (CPC):
**B60L 53/62; B60L 53/66; B60L 58/12; H02J 7/00;**
**H02J 50/10; H02J 50/80;** Y02T 10/70;
Y02T 10/7072; Y02T 90/12; Y02T 90/16

(86) International application number:
**PCT/KR2021/008969**

(87) International publication number:
**WO 2022/015017 (20.01.2022 Gazette 2022/03)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **13.07.2020  US 202063050925 P**
**10.08.2020  US 202063063642 P**

(71) Applicants:
• **HYUNDAI MOTOR COMPANY**
**Seoul 06797 (KR)**

• **Kia Corporation**
**Seocho-gu**
**Seoul 06797 (KR)**
• **Myongji University Industry and Academia**
**Cooperation Foundation**
**Gyeonggi-do 54538 (KR)**

(72) Inventor: **SHIN, Min Ho**
**Yongin-si, Gyeonggi-do 17058 (KR)**

(74) Representative: **Isarpatent**
**Patent- und Rechtsanwälte Barth**
**Charles Hassa Peckmann & Partner mbB**
**Friedrichstrasse 31**
**80801 München (DE)**

(54) **TARGET POWER TRANSMISSION AMOUNT CHANGING METHOD AND POWER TRANSMITTING APPARATUS FOR IMPLEMENTING SAME**

(57)    Provided is a target power transmission amount changing method enabling an EV user to change a pre-set target power transmission amount by accessing EVSE directly or via a network from the outside of an EV, when the EV is being charged or in a charging standby state at a charging station. The target power transmission amount changing method according to an embodiment is for changing a target power transmission amount set by an electric vehicle through an interaction with a charging station, at the charging station, and comprises the steps of: allowing an access request of an electric vehicle user through a path that does not pass through the electric vehicle; accepting a change request regarding the target power transmission amount from the electric vehicle user, through the path; transmitting, to the electric vehicle, a predetermined message including a new energy requirement amount included in the change request; receiving, from the electric vehicle, a parameter setting message designating the new energy requirement amount as a new target power transmission amount; and allowing power transmission to be performed according to a changed target power transmission amount.

EP 4 166 380 A1

# FIG. 10

**Description**

**TECHNICAL FIELD**

The present disclosure relates to a method and apparatus for transferring electrical power to an electric vehicle and, more particularly, to a method of enabling an electric vehicle user to check a power transfer state and change the target power transfer amount and a power transfer apparatus for implementing the method.

**BACKGROUND ART**

An electric vehicle user who wants to charge an electric vehicle (EV) at a charging station can set the target power transfer amount at a start of a charging, and can change the target power transfer amount during the charging. The setting or change of the target power transfer amount may be done in the EV, and a communication procedure between the EV and the EV Supply Equipment (EVSE) for the setting or change is described in a standard document ISO 15118-2 and an interim standard document ISO 15188-20.
However, when the EV user wants to change the target power transfer amount for some reason in a state that the EV user is out of the EV while the charging is in progress or the EV is waiting for the charging, it may be probable that the EV user cannot approach the EV because of a distance between the user and the vehicle or some safety regulations. As a result, once the charging is initiated or the charging enters a standby state, the EV user may not be able to change the target power transfer amount. In particular, the possibility that the problem occurs is higher in the case of the wireless power transfer due to a safety issue.
Accessing the EV through an EV manufacturer (OEM) server may be envisioned but is not a proper approach because the procedure is complicated and far from a normal access route to the EV, and the method may bring about a difficulty in billing and obtaining payments from the EV user. Therefore, it is desirable to find a method of changing the target power transfer amount by accessing the EVSE through a secondary actor involved in the payment settlement for the power transfer or the distribution of information for the power transfer. However, a procedure or method of changing the target power transfer amount outside the EV through a secondary actor is not specified in the standards such as the ISO 15118-2.

**DISCLOSURE OF INVENTION**

**TECHNICAL PROBLEM**

To solve the problems above, provided is a method of changing the target power transfer amount, which allows the EV user to change the target power transfer amount by accessing the EVSE from outside the EV through a network or by directly accessing the EVSE while the charging is in progress or in a standby state, so that the power transfer is accomplished according to an updated target power transfer amount.
Provided is a charging station apparatus for implementing the method of changing the target power transfer amount.

**TECHNICAL SOLUTION**

According to an aspect of an exemplary embodiment, provided is a method of changing a target power transfer amount, in a charging station, set by an electric vehicle (EV) through an interaction with the charging station. The method includes: allowing an access of an EV user through a path not passing the EV; receiving a change request for changing the target power transfer amount from the EV user through the path; transmitting, to the EV, a predetermined message including a new energy request included in the change request; receiving, from the EV, a parameter setting message designating the new energy request as a new target power transfer amount; and allowing a power transfer to be performed according to a changed target power transfer amount.
The target power transfer amount may be one selected from: a departure time, a target state of charge, and a minimum state of charge.
The operation of receiving the parameter setting message may include re-negotiating a charging profile with the EV.
The operation of re-negotiating the charging profile with the EV may include: transmitting a parameter setting response message including an offer for a maximum charging power to the EV in response to the parameter setting message.
The method may further include: providing the target power transfer amount to the EV user through the path before receiving the request for changing the target power transfer amount.

The method may further include: receiving, from the EV, a predetermined configuration parameter indicating a permission of a change through the path before receiving the request for changing the target power transfer amount. The operation of transmitting the predetermined message including the new energy request may include: checking the permission for the EV based on the configuration parameter; transmitting the predetermined message to the EV when the change through the path is permitted for the EV; and ignoring the change request when the change through the path is not permitted for the EV.

The operation of transmitting the predetermined message including the new energy request may include: specifying a predetermined acknowledgement time limit in the predetermined message so that the EV transmits a change acknowledgement within the acknowledgement time limit. The method may further include: notifying the EV user of a completion of the change after receiving the change acknowledgement from the EV.

An access request and the change request of the EV user may be received through an external device capable of connecting to the charging station through a predetermined network.

The charging station may directly receive an access request and the change request of the EV user from the EV user through a user interface of the charging station.

According to another aspect of an exemplary embodiment, provided is a charging station apparatus for transferring electrical power to or from an electric vehicle (EV). The apparatus includes: a memory having program instructions stored therein; and a processor coupled to the memory and configured to execute the program instructions stored in the memory. The program instructions, when executed by the processor, causes the processor to: set the target power transfer amount in response to a request of the EV; allow an access of an EV user through a path not passing the EV; receive a change request for changing the target power transfer amount from the EV user through the path; transmit, to the EV, a predetermined message including a new energy request included in the change request; receive, from the EV, a parameter setting message designating the new energy request as a new target power transfer amount; and allow a power transfer to be performed according to a changed target power transfer amount.

The target power transfer amount may be one selected from: a departure time, a target state of charge, and a minimum state of charge.

The program instructions causing the processor to receive the parameter setting message may cause the processor to re-negotiate a charging profile with the EV.

The program instructions causing the processor to re-negotiate the charging profile with the EV may cause the processor to transmit a parameter setting response message including an offer for a maximum charging power to the EV in response to the parameter setting message.

The program instructions may further cause the processor to provide the target power transfer amount to the EV user through the path before receiving the request for changing the target power transfer amount.

The program instructions may further cause the processor to receive, from the EV, a predetermined configuration parameter indicating a permission of a change through the path before receiving the request for changing the target power transfer amount. The program instructions causing the processor to transmit the predetermined message including the new energy request may further cause the processor to: check the permission for the EV based on the configuration parameter; transmit the predetermined message to the EV when the change through the path is permitted for the EV; and ignore the change request when the change through the path is not permitted for the EV.

The program instructions causing the processor to transmit the predetermined message including the new energy request may cause the processor to specify a predetermined acknowledgement time limit in the predetermined message so that the EV transmits a change acknowledgement within the acknowledgement time limit. The program instructions may further cause the processor to notify the EV user of a completion of the change after receiving the change acknowledgement from the EV.

An access request and the change request of the EV user may be received through an external device capable of connecting to the charging station through a predetermined network.

The charging station apparatus may further include a user interface configured to directly receive an access request and the change request of the EV user from the EV user.

According to yet another aspect of an exemplary embodiment, provided is a method of changing a target power transfer amount in an electric vehicle (EV). The method includes: providing an input target power transfer amount designated by an EV user to a charging station to set the target power transfer amount; determining whether or not to permit a change through a path passing the charging station without passing the EV according to a settings set by the EV user; receiving, from the charging station, a predetermined message including a new energy request presented to the charging station by the EV user through the path; and checking a permission and, when the change through the path is not permitted for the EV, transmitting a parameter setting message designating the new energy request as a new target power transfer amount to the charging station so that the target power transfer amount is changed.

The operation of checking the permission may include transmitting a predetermined configuration parameter including permission information to the charging station.

## ADVANTAGEOUS EFFECTS

According to an exemplary embodiments, the EV user may change the target power transfer amount by accessing the EVSE from outside the EV through a network or by directly accessing the EVSE while the charging is in progress or in a standby state. Thus, the EV user may change the target power transfer amount even when the EV user is out of the EV.

Accordingly, the EV user may quickly change the target charging level for economic or other reasons. In addition, the EV user may maximize an incentive provided by the vehicle-grid integration (V2G) system taking care of a demand response (DR), i.e., a peak reduction and a frequency regulation (FR) operation to prevent a distortion of a power factor. The VGI system may utilize EVs in a timely manner to stabilize the power grid.

Since the change of the target power transfer amount is permitted based on a configuration parameter previously set in the EV by the EV user, the present disclosure may enhance the user convenience without compromising the security of the EV and EVSE.

## DESCRIPTION OF DRAWINGS

FIG. 1 is a block diagram of an electric vehicle charging infrastructure according to an exemplary embodiment of the present disclosure;

FIG. 2 is a block diagram of an exemplary embodiment of a conductive power transfer system to which the present disclosure is applicable;

FIG. 3 is a block diagram of an exemplary embodiment of a wireless power transfer system to which the present disclosure is applicable;

FIG. 4 is a flowchart showing a communication process between an EVCC and a SECC for charging an electric vehicle;

FIG. 5 is a graph illustrating a concept of basic energy requirements and limitations in an electric vehicle along with energy request parameters that an EVCC may transmit to a SECC;

FIG. 6 is a table summarizing a format and meaning of bi-directional power transfer control mode parameters for indicating whether target change through EVSE is permitted in an embodiment of the present disclosure;

FIG. 7 is a flowchart showing an example of a parameter setting process for the exemplary parameter of FIG. 6;

FIG. 8 is a table summarizing the format and meaning of elements designating priorities in another embodiment of the present disclosure;

FIG. 9 is a schema diagram of a ChargeParameterDiscoveryRes() message according to an embodiment of the present disclosure;

FIG. 10 is a sequence diagram showing an example of a change process in a state that the charging is paused in a scheduled control mode;

FIG. 11 is a sequence diagram showing an example of the change process in a state in which charging is paused in a dynamic control mode;

FIG. 12 is a sequence diagram showing an example of the change process when the charging loop is in progress in the scheduled control mode;

FIG. 13 is a sequence diagram showing an example of the change process when the charging loop is in progress in the dynamic control mode;

FIG. 14 is a schema diagram of a ChargeLoopReq() message according to an exemplary embodiment of the present disclosure;

FIG. 15 is a schema diagram of a DisplayParameters element according to an exemplary embodiment of the present disclosure;

FIG. 16 is a schema diagram of a ChargeLoopRes() message according to an exemplary embodiment of the present disclosure;

FIG. 17 is a schema diagram of a BPT_Dynamic_CSResControlMode parameter according to an exemplary embodiment of the present disclosure;

FIG. 18 is a schema diagram of a BPT_Dynamic_CDResControlMode parameter according to an exemplary embodiment of the present disclosure; and

FIG. 19 is a block diagram of a charging station according to an exemplary embodiment of the present disclosure.

## BEST MODE

For a clearer understanding of the features and advantages of the present disclosure, exemplary embodiments of the present disclosure will be described in detail with reference to the accompanied drawings. However, it should be understood that the present disclosure is not limited to particular embodiments and includes all modifications, equivalents, and alternatives falling within the idea and scope of the present disclosure. In describing each drawing, similar reference numerals have been used for similar components.

The terminologies including ordinals such as "first" and "second" designated for explaining various components in this specification are used to discriminate a component from the other ones but are not intended to be limiting to a specific component. For example, a second component may be referred to as a first component and, similarly, a first component may also be referred to as a second component without departing from the scope of the present disclosure. The expression "and/or" may be used to refer to a combination of a plurality of listed items or any of the plurality of listed items.

When a component is referred to as being "connected" or "coupled" to another component, the component may be directly connected or coupled logically or physically to the other component or indirectly through an object therebetween. Contrarily, when a component is referred to as being "directly connected" or "directly coupled" to another component, it is to be understood that there is no intervening object between the components.

The terminology used herein is for the purpose of describing particular embodiments only and is not intended to be limiting of the disclosure. As used herein, the singular forms "a," "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

Unless defined otherwise, all terms used herein, including technical or scientific terms, have the same meaning as commonly understood by those of ordinary skill in the art to which the present disclosure pertains. Terms such as those defined in a commonly used dictionary should be interpreted as having meanings consistent with meanings in the context of related technologies and should not be interpreted as having ideal or excessively formal meanings unless explicitly defined in the present application.

Terms used in the present disclosure are defined as follows.

"Electric Vehicle (EV)": An automobile, as defined in 49 CFR 523.3, intended for highway use, powered by an electric motor that draws current from an on-vehicle energy storage device, such as a battery, which is rechargeable from an off-vehicle source, such as residential or public electric service or an on-vehicle fuel powered generator. The EV may be a four or more wheeled vehicle manufactured for use primarily on public streets or roads. The EV may include an electric vehicle, an electric automobile, an electric road vehicle (ERV), a plug-in vehicle (PV), a plug-in vehicle (xEV), etc., and the xEV may be classified into a plug-in all-electric vehicle (BEV), a battery electric vehicle, a plug-in electric vehicle (PEV), a hybrid electric vehicle (HEV), a hybrid plug-in electric vehicle (HPEV), a plug-in hybrid electric vehicle (PHEV), etc.

"Wireless power charging system (WCS)": A system for wireless power transfer and control of interactions including operations for an alignment and communications between a ground assembly (GA) and a vehicle assembly (VA).

"Wireless power transfer (WPT)": A transfer of electric power between a power source such as a utility and the power grid and the EV through a contactless channel.

"Utility": A set of systems which supply electrical energy and include a customer information system (CIS), an advanced metering infrastructure (AMI), rates and revenue system, etc. The utility may provide an EV with energy according to a rates table and through discrete events. Also, the utility may provide information related to certification on EVs, interval of power consumption measurements, and tariff.

"Smart charging": A system in which an electric vehicle supply equipment (EVSE) and/or a PEV communicate with the power grid to optimize a charging ratio or a discharging ratio of an EV by taking into account the capacity allowed by the power grid or the tariff for the electricity.

"Interoperability": A state in which components of a system interwork with corresponding components of the system to perform operations aimed by the system. Additionally, information interoperability may refer to capability that two or more networks, systems, devices, applications, or components may efficiently share and easily use information without causing inconvenience to users.

"Original Equipment Manufacturer (OEM)": A server operated by a producer who manufactures the EV and may refer to a Root Certification Authority (RootCA) issuing an OEM RootCA Certificate.

"Mobility Operator (MO)": A service provider with which the EV owner has a contract for services related to the EV operation such as a charging, authorization, and billing to enable an EV driver may charge the EV in the charging station.

"Charging station (CS)": A facility equipped with one or more electric vehicle supply equipment's (EVSEs) and physically performing the charging to the EVs.

"Charging station operator (CSO)": A party responsible for the provisioning and operation of a charging infrastructure and managing electricity to provide a requested energy transfer service. The charging station operator may be a term having a same concept as a charge point operator (CPO).

"Charge Service Provider (CSP)": An entity managing and authenticating EV user's credentials and providing the billing and other value-added services to customers. The CSP may be considered as a special type of the mobility operator (MO) and may be integrated with the MO.

"Clearing House (CH)": An entity handling cooperation between the MOs, CSPs, and CSOs. In particular, the clearing house may perform a role of an intermediate actor facilitating authorization, billing, and settling procedure for the EV charging service roaming, between two clearing parties.

"Roaming": Information changes and a scheme and provisions between CSPs, which allows EV users to access the charging services provided by multiple CSPs or CSOs pertaining to multiple e-mobility networks by using a single credential and contract.

"Credential": A physical or digital asset representing an identity of an EV or EV owner, and may include a password used to verify the identity, a public key and private key pair used in a public key encryption algorithm, a public key certificate issued by a certification authority, information related to a trusted root certification authority.

"Certificate": An electronic document binding a public key to an ID by a digital signature.

"Service session": A collection of services around a charge point related to the charging of an EV assigned to a specific customer in a specific timeframe with a unique identifier.

"V2G charging loop" or "V2G charging loop": A messaging process according to an ISO 15118 standard to control a charging process.

"Renegotiation": A messaging process between the EV and the EVSE during a V2G communication session to renew a charging schedule by retransmitting parameters to each other.

"Multiplexed communications": Communications between the EV and the EVSE through a V2GTP connection to transfer multiple messages having different types of payloads.

"V2G transfer protocol (V2GTP)": A communication protocol to transfer V2G messages between two V2GTP entities.

"V2GTP entity": A V2G entity supporting the V2G transport protocol.

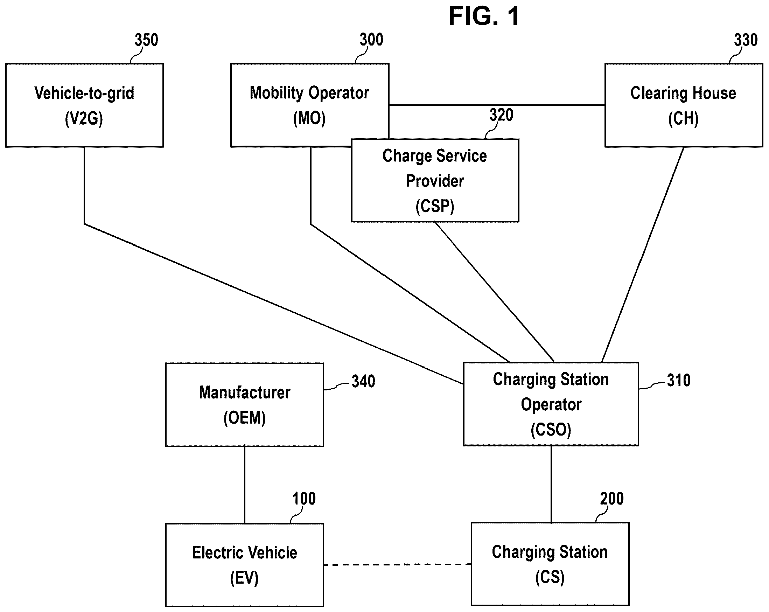

FIG. 1 is a block diagram of an EV charging infrastructure according to an exemplary embodiment of the present disclosure, showing entities involved in an EV charging.

The EV charging infrastructure, which provides a charging service to an electric vehicle (EV) 100, includes a charging station (CS) 200, a mobility operator (MO) server 300, and a charging service operator (CSO) server 310, a charge service provider (CSP) server 320, a clearing house (CH) server 330, an original equipment manufacturer (OEM) server 340, and a vehicle-to-grid (V2G) server 350.

The EV charging infrastructure, which provides the charging service to the EV 10, includes a charging station (CS) 200, a mobility operator (MO) server 300, a charging station operator (CSO) server 310, a charge service provider (CSP) server 320, a clearing house (CH) server 330, an original equipment manufacturer (OEM) server 340, and a vehicle-to-grid (V2G) server 350.

The EV charging infrastructure shown in the drawing constitutes a vehicle-grid integration (VGI) system that supplies electrical energy from a power grid to the EV 100 so as to enable the EV 100 to charge a battery therein as well as provides the electrical energy stored in the battery of the EV 100 to a building electrically connected to the power grid or a specific device. An EV user may designate or change, in the EV 100, a target power transfer amount to be charged or discharged from or to the charging station 200. According to the present disclosure, the EV user may change the target power transfer amount while being out of the EV 100, i.e., outside the EV 100, by accessing the charging station 200 through other entities 300-350. During a process of changing the target power transfer amount, the EV 100 and the charging station 200 act as primary actors, and the MO server 300, CSO server 310, CSP server 320, CH server 330, the OEM server 340, and the V2G server 350 act as secondary actors.

The EV 100, which refers to a general electric vehicle including a plug-in hybrid electric vehicle (PHEV), may be charged at the charging station 200 by a conductive charging or a wireless power transfer. The charging station (CS) 200 actually performs the charging for the EV 100. The charging station 200 has one or more EV supply equipment (EVSE), and each EVSE may include at least one conductive charger and/or a wireless charging spot. The charging station 200 may be a dedicated commercial charging facility. The charging station 200 may be located in various places such as a parking lot attached to an EV owner's house or a parking area of a shopping center, an office building, and or a group residential town, for example. The charging station 200 may also be referred to as a 'charging point', an 'EV charging station', an 'electric charging point', or an 'electronic charging station (ECS)'.

The mobility operator (MO) server 300 is a service provider with which the EV owner has a contract for services related to the EV operation such as the charging, authorization, and billing to enable the EV driver may charge the EV in the charging station 200. In order for the EV 100 to receive the charging service from a charging station, the charging station has to belong to the MO or the charging infrastructure has to support a roaming scenario. The MO 300 may be operated by an electricity supplier or an electricity wholesaler, but the present disclosure is not limited thereto. The MO may also be referred to as an 'E-mobility service provider (EMSP)'.

The charging station operator (CSO) server 310 or a charge point operator (CPO) operates the charging station and manages the electricity to provide a requested energy transfer service. The CSO 310 may be operated by a charging station manufacturer or the electricity supplier, for example.

The charge service provider (CSP) 320 manages and authenticates credentials of the EV user and provides the billing and other value-added services to customers. The CSP 320 may be considered as a particular type of the MO 300 and may be implemented with the MO 300. The may exist a plurality of CSPs 320. In such a case, each CSP 320 may be associated with one or more CSOs 310 so that the CSP 320 and the one or more CSOs 310 constitute a charging network. The EV 100 may receive an automatic charging service according to a plug-and-charge or park-and-charge (PnC) scheme in a network of the CSO 310 associated with the CSP 320 that is associated again with the MO 100 having a contractual relationship with the EV 100. However, a roaming may be required when the EV 100 is to be charged at a charging station of another CSO 310 which is not associated with the CSP 320 that is associated again with the MO 100 having the contractual relationship with the EV 100. Each CSP 200 may exchange information with another CSP or CSO 310 belonging to another charging network and may also exchange information with the clearing house 330 to enable the roaming.

The clearing house (CH) server 330 handles the cooperation between the MOs 300 and the CSPs 320. In particular, the CH 330 may perform a role of an intermediate actor facilitating the authorization, billing, and settling procedure for the EV charging service roaming between two clearing parties. When the EV driver wishes to charge the EV at a charging station that does not belong to the charging network of the MO 300 having the contractual relationship with the EV, the CH 330 may be connected to the CSO 310 or the CSP 320 to facilitate the roaming. In a situation that the roaming is required, the CH 330 enables the CSO 310 or CSP 320 to contract with the MO 300 and turn over authorization data and charging detail records (CDR) to the MO 300. The CH 330 may also be referred to as a 'contract clearing house (CCH)', 'mobility clearing house (MCH)', 'roaming platform', or 'e-mobifity clearing house (E-MOCH)'.

The vehicle-to-grid server (hereinafter, referred to as 'V2G') 350 allows verifications of identities of the actors in the VGI system and manages all settings and system configuration related to a forward power transfer from the grid to the EV and a reverse power transfer from the EV to the grid. In addition, considering that a power demand and a power factor may fluctuate by time within the grid, the V2G 350 may perform operations for a demand response (DR), i.e., a peak reduction and may perform a frequency regulation (FR) operation to prevent a serious distortion of the power factor. In terms of the DR and the FR, the V2G 350 may adjust supplies of the electrical energy from various power sources including power generation companies, renewable energy sources, and the EVs 100 moment by moment, and may monitor a power supply to each customer.

Though the terms 'mobility operator (MO)', the 'charging service operator (CSO)', the 'clearing house (CCH)', and the 'V2G' may seem to refer to persons or organizations, these terms used herein including the claims may be implemented in hardware, software, and/or a combination thereof and are just named functionally in short to increase readability. In an exemplary embodiment, these components may be a server device implemented by a combination of hardware and software that allows an access of other devices through a network such as the Internet. Since these components are functionally divided, two or more of them may be stored and executed in a single physical device or may be integrated into a single program. In particular, a single entity may serve as both the CSO and the CSP, and another single entity may serve as both a certificate provisioning service (CPS) and a contract certificate pool (CCP). Meanwhile, one or more of the components may be rearranged to have a different appearance and name.

On the other hand, the EV charging service and the related infrastructure are in a field where various industrial fields such as automobiles, power grid, energy, transportation, communications, finance, and electronic products converges, and standardizations therefor have been carried out in parallel in various viewpoints and by various subjects including multiple international standardization organizations and local standardization organizations in individual countries, and thus there exist many terms containing similar concepts. In particular, the charging station operator (CSO) and the charge point operator (CPO) may have common roles and functions and may refer to substantially the same entity as each other although there may be some functional differences and nuances. In addition, the charging service provider (CSP) may at least partially have common roles and functions with the mobility operator (MO), and these terms may be used interchangeably. Such circumstances are to be taken into account while interpreting the present specification including the claims.

In the EV charging infrastructure shown in FIG. 1, a public key infrastructure (PKI) is used as a basis for operating the PnC. The PKI provides a framework for verifying identities of a person and a device, activating confidential communications, and ensuring controlled access to resources. An example of a PKI-based certificate hierarchy is prescribed in the ISO 15118-20 standard.

In the EV charging infrastructure shown in FIG. 1, the EV user who is out of the EV 100, i.e., outside the EV 100, may access the MO 300 to check a charging state of the EV 100 of the user which is being charged or in a charging standby state or to request a change of the target power transfer amount. The MO 300 may access the EVSE of the charging station 200 in response to a request of the EV user and request to provide information on the charging state of the EV 100 or change the target power transfer amount. The MO 110 may perform a billing or a tariff settlement operation as needed after the change of the target power transfer amount.

Alternatively, the system may be configured such that the EV user may request the change of the target power transfer amount through another secondary actor (SA) such as the CSO 310, CSP 320, CH 330, or V2G server 350 rather than the MO 300. The secondary actor having received a request for the change may access the EVSE directly or through another secondary actor such as the MO 300 to request again the service requested by the EV user. A path through which the request of the EV user is transferred to the EVSE may be modified otherwise, and the present disclosure is not limited to a particular path that a certain secondary actor is involved with. Meanwhile, the EV user may directly input the request for the change of the target power transfer amount in the EVSE 210.

The change of the target power transfer amount may be carried out to maximize an incentive provided by the V2G 350 in terms of the DR and the FR, or may be done to adjust a target charging level for an economic reason or other reasons, or may be done due to other reasons.

The method of changing the target power transfer amount according to the present disclosure may be particularly useful in a system that charges the EV 100 by a wireless power transfer (WPT). However, the method for changing the target power transfer amount according to the present disclosure is not limited to the wireless power transfer (WPT) system but may be used in a system for charging the EV 100 by a conductive charging. The energy transfer modes that the EVSE 200 charges the EV 100 includes an alternating current (AC) mode, a direct current (DC) mode, and a WPT mode. A possibility of a bidirectional power transfer (BPT) and a use of an automated connection device (ACD) may yield 12 combinations of: AC, DC, WPT, AC_ACD, DC_ACD, WPT_ACD, AC_BPT, DC_BPT, WPT_BPT, AC_ACD_BPT, DC_ACD_BPT, and WPT_ACD_BPT. The method of changing the target power transfer amount according to the present disclosure is applicable to all or some of all the energy transfer modes.

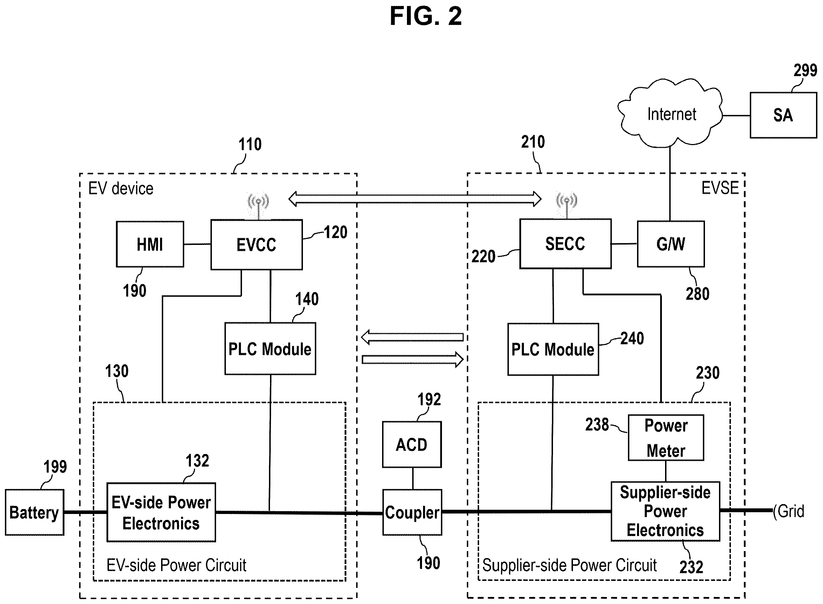

FIG. 2 is a block diagram of an exemplary embodiment of a conductive power transfer system to which the present disclosure is applicable. The power transfer system may include an EVSE 210 installed at a power transfer point such as the charging station 200 and an EV device 110 installed in the EV 100, and may supply the DC or AC electrical power to the EV 100 through a conductor so that the power may charge the battery 199 mounted in the EV 100. The EV device 110 and the EVSE 210 may be connected through a coupler 190. An automatic connection device (ACD) 192, which may be optional, may facilitate a connection of the coupler 190 and may support the coupler 190.

The EVSE 210 may include a supply equipment communication controller (SECC) 220, a supply-side power circuit 230, a power line communications (PLC) module 240, and a gateway 280. Though the SECC 220 may be installed outside the EVSE 210 as well in the charging station and one SECC 220 may be configured to control a plurality of, for example, four EVSEs 210, it is shown in FIG. 2 that one EVSE 210 includes two SECCs 220 for the convenience of description.

The SECC 220, which is a high-level controller, may communicate with an EV communication controller (EVCC) 120 in the EV device 110 through power line communications (PLC) or a wireless LAN (WLAN). The SECC 220 and the EVCC 120 may communicate with each other in an application layer, i.e., in an OSI layer 3 and higher layers according to an ISO 15118-20 standard, for example. A physical layer and a data link layer between the SECC 220 and the EVCC 120 may be configured to conform to the ISO 15118-8 standard, for example. In addition, the SECC 220 may control the supply-side power circuit 230. Further, according to the present disclosure, the SECC 220 may receive a request to change the target power transfer amount from the EV user through a secondary actor such as the MO 300 over the Internet and communicate with the EVCC 120 to enable the change of the target power transfer amount.

The supply-side power circuit 230 may supply the power from the power grid to the EV 100 or supply the power discharged by the EV 100 to the power grid. The supply-side power circuit 230 may include a supply-side power electronic circuit 232, an electric power meter 238, and an ammeter (not shown). The supply-side power electronic circuit 232 may include one or more of a converter adjusting a level of a voltage and/or a current and a rectifier converting an AC current into a DC current. The electric power meter 238 measures an amount of energy supplied to the EV device 110 through the supply-side power electronic circuit 232 or an amount of energy supplied in a reverse direction from the EV device 110 to the supply-side power electronic circuit 232. The ammeter measures a magnitude of the current flowing between the EV device 110 and the EVSE 210 to enable to monitor whether the power is transferred according to a prescribed current profile or not.

The PLC module 240 may modulate a signal transmitted to the EV device 110 through the power line communications and demodulate a signal received from the EV device 110 through the power line communications. Although not shown in the drawing, the EVSE 210 may further include a control pilot transceiver capable of transmitting a control signal to the EV device 110 through a cable connecting the EVSE 210 and the EV device 110 and receiving a control signal from the EV device 110.

The gateway 280 may provide a connection of the SECC 220 to a secondary actor (SA) 299 over the Internet so as to enable an authentication of a user and a payment processing through communications between the SECC 220 and the SA 299. In particular, according to the present disclosure, the SECC 220 may receive the request to change the target power transfer amount of the EV user from the SA 299 through the gateway 280.

The EV device 110 may include an EVCC 120, an EV-side power circuit 130, a PLC module 140, and a human machine interface (HMI) device 190.

The EVCC 120, which is a high-level controller, may communicate with the SECC 220 in the EVSE 210 through the power line communications (PLC) or the wireless LAN (WLAN). The EV-side power circuit 130 may charge the battery 199 used for a propulsion of the EV 100 by the power received from the EVSE 210, or may supply the energy stored in the battery 199 to the power grid through the EVSE 210. The EV-side power electronic circuit 132 in the EV-side power circuit 130 may include one or more of a converter adjusting a level of a voltage and/or a current and a rectifier converting the AC current into the DC current. The PLC module 140 may modulate a signal transmitted to the EVSE 210 through the power line communications and demodulate a signal received from the EVSE 210 through the power line communications.

The HMI device 190 allows the EV user to check the state information of the EV device 110 and input information necessary for operating the EV 100. In particular, according to the present disclosure, the HMI device 190 may enable the EV user to set or change the target power transfer amount and check the charging or discharging state of the battery 199.

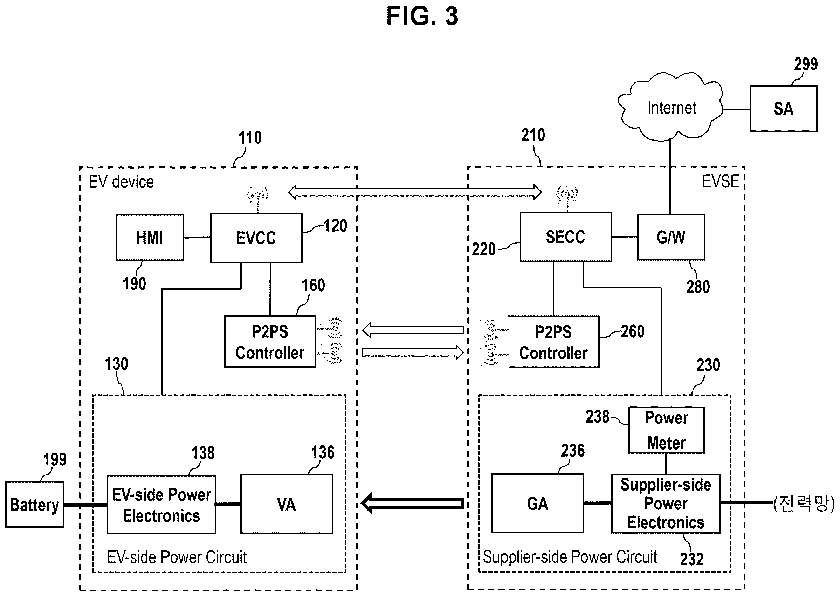

FIG. 3 is a block diagram of an exemplary embodiment of a wireless power transfer system to which the present disclosure is applicable. The wireless transfer system may include an EVSE 210 installed at a power transfer point such as the charging station 200 and an EV device 110 installed in the EV 100, and may supply the electrical power to the EV 100 by the wireless power transfer so that the power may charge the battery 199 mounted in the EV 100.

The EVSE 210 may include a supply equipment communication controller (SECC) 220, a supply-side power circuit 230, a point-to-point signal (P2PS) controller 260, and a gateway 280. Though the SECC 220 may be installed outside the EVSE 210 as well in the charging station and one SECC 220 may be configured to control a plurality of, for example, four EVSEs 210, it is shown in FIG. 2 that one EVSE 210 includes two SECCs 220 for the convenience of description.

The SECC 220, which is a high-level controller, may communicate with the EVCC 120 in the EV device 110 through the wireless LAN (WLAN). The SECC 220 and the EVCC 120 may communicate with each other in an application layer, i.e., in an OSI layer 3 and higher layers according to the ISO 15118-20 standard, for example. A physical layer and a data link layer of the WLAN link may be configured to conform to the ISO 15118-8 standard, for example. In addition, the SECC 220 may control the supply-side power circuit 230 and the P2PS controller 260. Further, according to the present disclosure, the SECC 220 may receive a request to change the target power transfer amount from the EV user through a secondary actor such as the MO 300 over the Internet and communicate with the EVCC 120 to enable the change of the target power transfer amount.

The supply-side power circuit 230 may supply the power from the power grid to the EV 100 or supply the power discharged by the EV 100 to the power grid. During a forward power transfer process in which the power is supplied from the EVSE 210 to the EV 100, the supply-side power circuit 230 may receive the electric power supplied from the power grid, forms a magnetic flux, and transfer the energy to the EV device 110 by a magnetic resonance. The supply-side power circuit 230 may include a supply-side power electronic circuit 232 adjusting a frequency and levels of the voltage and/or the current, a ground assembly (GA) device 236 generating a highfrequency magnetic flux, and an electric power meter 238 measuring an amount of energy transferred between the EVSE 210 and the EV device 110.

The P2PS controller 260 may perform P2PS communications with a corresponding component of the EV device 110 under a control of the SECC 220. In this specification including the appended claims, the P2PS communication refers to a communication of transmitting and receiving a signal for the charging using a low frequency (LF) magnetic field signal and/or a low power excitation (LPE) signal.

The EV device 110 may include an EVCC 120, an EV-side power circuit 130, and a P2PS controller 160.

The EVCC 120, which is a high-level controller, may communicate with the SECC 220 in the EVSE 210 through the wireless LAN. The EVCC 120 may control the EV-side power circuit 130 and the P2PS controller 160. The P2PS controller 160 may perform P2PS communications with the P2PS controller 260 of the EVSE 210 using the low frequency (LF) magnetic field signal and/or the low power excitation (LPE) signal under the control of the EVCC 120.

The EV-side power circuit 130 may transform magnetic energy received from the EVSE 210 into electrical energy to charge the battery 199, or may transform the energy stored in the battery 199 into the electrical energy to transfer the energy to the EVSE 210 in a form of the magnetic energy. During the forward power transfer process in which the power is supplied from the EVSE 210 to the EV 100, the EV-side power circuit 130 may receive the magnetic energy from the GA 236 of the EVSE 210, convert the received magnetic energy into an induced current, and rectify the induced current into a direct current to charge the battery 199. The EV-side power circuit 130 may include a vehicle assembly (VA) device 136 receiving the high-energy level magnetic energy supplied in a magnetic resonance state from the GA device 236 by capturing a magnetic flux fluctuation induced by the GA device 236 and transforming the magnetic energy into the current, and an EV-side power electronic circuit 138 rectifying the current.

As mentioned above, the power transfer system to which the method of changing the target power transfer amount according to the present disclosure is applicable may transfer the power from the power grid to the EV 100 to charge the battery 199 of the EV 100 or transfer the energy stored in the battery 199 of the EV 100 to the power grid.

In exemplary embodiments described hereinafter, however, it is assumed that the power is transferred in the forward direction to the EV device 110 through the EVSE 210 to charge the battery 199 for the convenience of description.

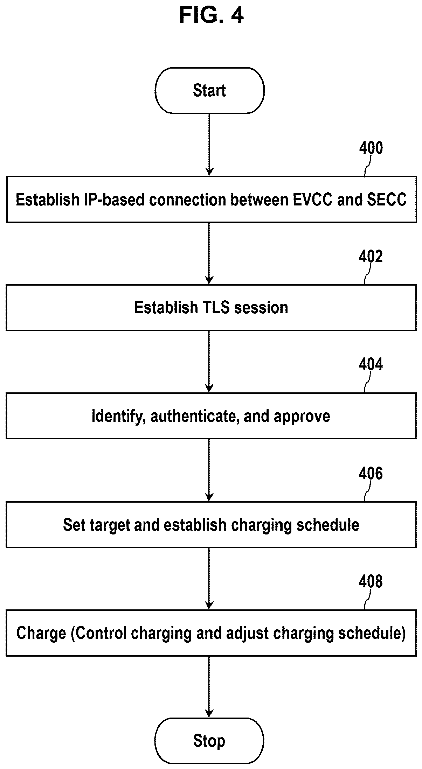

FIG. 4 is a flowchart showing a communication process between the EVCC 120 and the SECC 220 for the EV charging.

First, an Internet protocol (IP) based connection may be established between the EVCC 120 and the SECC 220 (step 400). The EVCC 120 may establish a secure channel with the SECC 220 through the IP-based connection to protect the communications from an unauthorized access (step 402). The establishment of the secure channel may be achieved by a Transport Layer Security (TLS) scheme defined in the IETF RFC 5246 standard. At this time, a TLS server authentication procedure may be performed using a SECC certificate and a V2G Root certificate. Subsequently, an identification, authentication, and approval of the EV 100 may be performed using a contract certificate chain of the EV 100 (step 404).

Next, the target power transfer amount may be set, and a charging schedule may be established (step 406). The setting of the target power transfer amount and the establishment of the charging schedule may be performed by an exchange of a ChargeParameterDiscoveryReq/Res message pair. That is, the EVCC 120 may transmit the ChargeParameterDiscoveryReq() message to the SECC 220 to request applicable charging parameters, and the SECC 220 may respond to the EVCC 120 with the ChargeParameterDiscoveryRes() message. Through successive message exchanges, the EVCC 120 and the SECC 220 may set the target power transfer amount and establish the charging schedule.

After the target power transfer amount is set and the charging schedule is established, the charging may be performed (step 408). While the charging is in progress, the EVCC 120 may notify the charging status to the SECC 220 by sending a ChargingStatusReq() message, and the SECC 220 may control the charging current based on this message and respond to the EVCC 120 by sending a ChargingStatusRes() message. When the power transfer is completed, the EVCC 120 may send a MeteringReceiptReq() message to the SECC 220 to request a receipt indicating the charge amount, and the SECC 220 may respond to this message by sending a MeteringReceiptRes() message to provide a the receipt in which the charge amount is indicated.

Meanwhile, the SECC 220 may change a profile for the charging current depending on the charging control mode. In addition, the SECC 220 may change the target power transfer amount according to the request of the EV user. As mentioned above, the request of the EV user to change the target power transfer amount may be made in the EVSE 210 or online through a secondary actor such as the MO 300.

The operation 406 of setting the target power transfer amount and establishing the charging schedule in FIG. 4 will now be described in more detail.

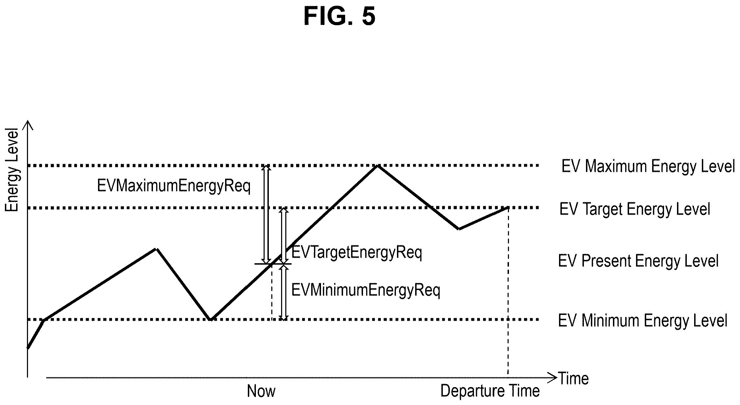

If the EV user manipulates the HMI device 190 to set the target power transfer amount, the EVCC 120 may transmit the target power transfer amount set by the user to the SECC 210 through the ChargeParameterDiscoveryReq() message. FIG. 5 illustrates a concept of basic energy requirements and limitations in the EV along with energy request parameters that the EVCC 110 may transmit to the SECC 210. The target power transfer amount transmitted by the EVCC 120 to the SECC 210 may be defined in a form of a 'departure time' indicating a point in time to terminate the charging session, a 'charging target' indicating a level of energy stored in the battery at a termination of the charging session, or a 'minimum charging amount' during the charging session.

The 'charging target' or the 'minimum charging amount' may be expressed by a driving distance, an amount of power in Watt-hour units, or a state of charge (SoC). Although the driving distance is the most useful concept, it is difficult to convert the distance into an energy unit. The Watt-hour unit may be the most sophisticated expression, it is difficult for the EV user to understand intuitively. The state of charge (SoC) may be the most intuitive and relatively accurate, and thus may be an expression suitable for indicating the battery energy level after the charging. In the following description, each energy level value is used to have a meaning of the SoC unless specified otherwise.

Referring to FIG. 5, the EVCC 120 may send to the SECC 210 one of an EV minimum energy request (EVMinimumEnergyReq), an EV maximum energy request (EVMaximumEnergyReq), and an EV target energy request (EVTargetEnergyReq) as a charging parameter.

The EV minimum energy request (EVMinimumEnergyRequest) indicates a minimum amount of energy requested by the EV at any given time during an energy transfer loop and may be calculated as a difference between a minimum level of energy requested by the EV as soon as possible and a current level of energy of the EV battery as shown in Equation 1. When the EVMinimumEnergyRequest is positive, an immediate charging is required for the EV. When the EVMinimumEnergyRequest value is equal to zero or negative, the charging may be postponed or a discharging may be available.

[Equation 1]

$$EVMinimumEnergyRequest = EV\ Minimum\ Energy - EV\ Present\ Energy$$

The EV maximum energy request (EVMaximumEnergyRequest) indicates a maximum amount of energy requested by the EV at any given time during the energy transfer loop and may be calculated as a difference between a maximum level of energy accepted by the EV and the current level of energy of the EV battery as shown in Equation 2.

[Equation 2]

EVMaximumEnergyRequest=EV Maximum Energy-EV Present Energy

The EV target energy request (EVTargetEnergyRequest) indicates an amount of energy that the EV requests to charge before the departure time of the EV and may be calculated as a difference between a level of energy requested by the EV at the departure time and the current level of energy in the EV battery as shown in Equation 3.

[Equation 3]

EVTargetEnergyRequest=EV Target Energy-EV Present Energy

On the other hand, the charging schedule refers to a profile plan of the charging current according to time. The establishment of the charging schedule may be performed in any one of two modes: a scheduled control mode and a dynamic control mode. In the scheduled control mode, the EVCC 120 and the SECC 220 negotiates and determines the power profile that meets mobility needs of the EV user. The power profile may be determined based on the target energy level, power information, and tariff information. In the scheduled control mode, the EV is responsible for meeting charging requirements of the EV user. In the dynamic control mode, the SECC 220 or a secondary actor such as the V2G 340 controls a flow of power to meet the charging requirements of the EV user and other constraints without any negotiation between the EVCC 120 and the SECC 220. For example, the V2G 340 may present the charging requirements or constraints so that each EV may be charged at night when the power demand is lowest. In this case, the SECC 220 may control the power flow according to constraints set by the secondary actor and may provide the EVCC 120 with any set point to be abided.

When the EV user set the target power transfer amount, that is, the target energy request, the EV user may set whether to allow the change of the target power transfer amount through the EVSE 210 while the user is out of the EV 100. As mentioned above, the request to change the target through the EVSE 210 includes not only a direct input of the request to the EVSE 210 but also a request of the change through a secondary actor such as the MO 300 so that the secondary actor forwards the request to the EVSE 210.

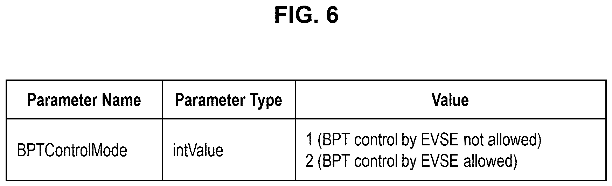

In case the EV user determines to allow the target change through the EVSE 210, a parameter indicating the allowance may be set and used. For example, according to an exemplary embodiment, a bidirectional power transfer control mode (BPTControlMode) parameter having an integer or logical type element, as summarized in FIG. 6, may be used. For example, the BPTControlMode parameter may be an integer parameter type element, and may have a value of '1' (i.e., BPTControlMode='1') to indicate that the target change request through the EVSE 210 is not allowed. Meanwhile, the BPTControlMode parameter may have a value of '2' (i.e., the BPTControlMode parameter='2') to indicate that the target change request through the EVSE 210 is allowed. In such a case, the request to change the target power transfer amount directly input to the EVSE 120 or received through the secondary actor may be forwarded by the EVSE 210 to the EV device 110, and may be processed with a priority over the change request input by the user in the EV 100.

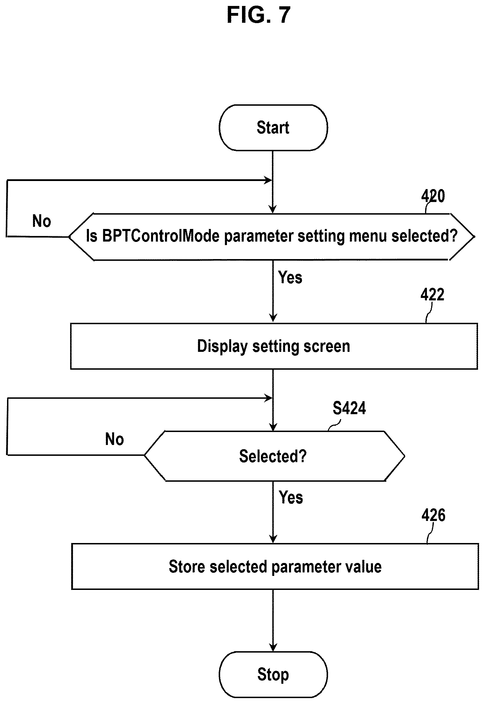

FIG. 7 is a flowchart showing a process of setting the BPTControlMode parameter according to an embodiment of the present disclosure. The BPTControlMode parameter may be set in the EV 100 by the EV user. When the user selects a menu for setting the BPTControlMode parameter through the HMI 190 of the EV device 110 (step 420), a setting screen is displayed on the display of the EV device 110 to allow the user to select one of the options for the BPTControlMode parameter (step 422). When the user selects an option for the BPTControlMode parameter (step 424), the selected parameter value is stored in the EV device 110 (step 426). The stored parameter may be forwarded to the SECC 220 via a message such as the ChargeParameterDiscoveryRes() message, for example.

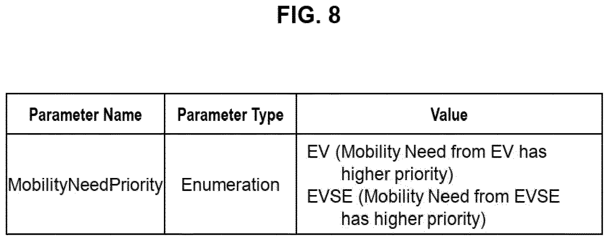

Whether or not to allow the 'request to change the target through the EVSE 210' may be indicated in another style. FIG. 8 is a table summarizing a format and meaning of an element designating a priority according to another embodiment of the present disclosure. According to the present embodiment, the EV user may select one item in an enumerated list including the EV and the EVSE to give priorities to the items. When the user selects the EV or the EVSE from the enumerated list, the selected element or a mobility need priority (MobilityNeedPriority) value determined according to the selection may store in the EV device 110 and may be used for the process of changing the target power transfer amount.

When the MobilityNeedPriority element has a value of 'EV' (i.e., MobilityNeedPriority='EV'), a higher priority is given to the change request input to the EV than the change request received through the EVSE. In this case, the EVSE ignores the request to change the target power transfer amount that is directly input to the EVSE or received through the secondary actor without providing it to the EV, or the EV ignores the request after the request is forwarded to the EV by the EVSE. Meanwhile, When the MobilityNeedPriority element has a value of 'EVSE' (i.e., MobilityNeedPriority='EVSE'), the higher priority is given to the change request received through the EVSE than the change request input in the EV. In this case, the request to change the target power transfer amount directly input to the EVSE or received through the secondary actor may be forwarded to the EV by the EVSE to be processed prior to the change request input by the user in the EV.

The communications between the EVCC 120 and the SECC 220 may be accomplished through the exchange of predetermined messages, and each message may include a SessionID facilitating the management of the communication session and one or more parameters. For example, a V2G communication session always starts with a SessionSetupReq/Res message pair and always ends with a SessionStopReq/Res message pair. On the other hand, when the EV does not need a power transfer but is required to maintain the V2G communications, the EV may enter a 'standby' state instead of a 'pause' state. The standby state may start with a PowerDeliveryReq message having a ChargeProgress parameter value of 'Standby' and end with a PowerDeliveryReq message having ChargeProgress parameter of 'Start' or 'Stop'. During the standby state, an EVOperation parameter in a charging loop message pair is set to 'Standby. After an authorization of the charging by the EVSE 210, the EVCC 120 and the SECC 220 may negotiate the charging parameters with the charging parameter discovery request/response (ChargeParameterDiscoveryReq/Res) message pair.

In particular, a ChargeParameterDiscoveryReq message may be used by the EVCC 120 to provide the charging parameters to the SECC 220. By sending the ChargeParameterDiscoveryReq message, the EVCC 120 may provide the status information about the EV 100 along with a departure time (DepartureTime) indicating the termination time and additional parameters. The ChargeParameterDiscoveryRes message may be used by the SECC 220 to provide the EVCC 120 with applicable charging parameters from a perspective of the grid. Next to the general charging parameters of EVSE 210, this message may optionally include additional information on cost over time, cost over demand, cost over consumption, or a combination thereof. The EV device 110 may optimize the charging schedule for the requested amount of energy based on the cost information.

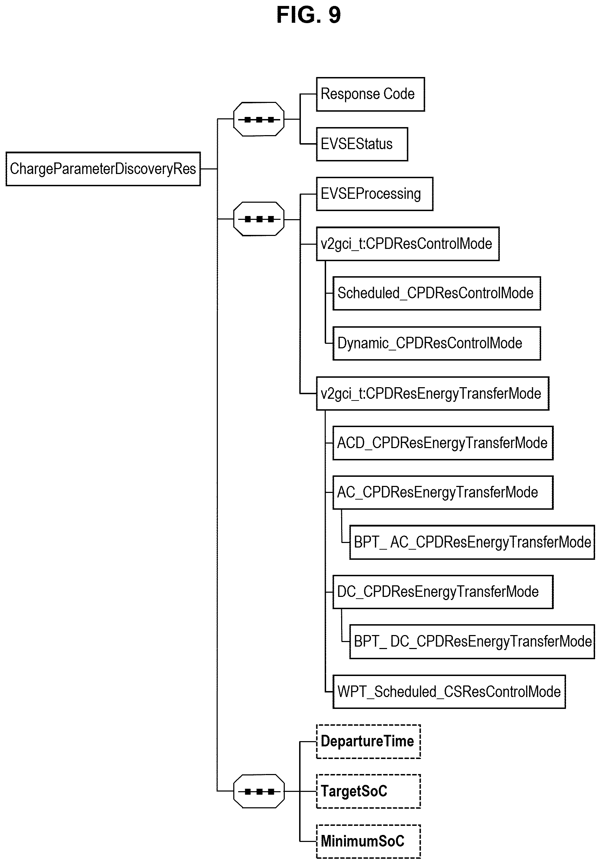

As shown in a schema diagram of FIG. 9, the ChargeParameterDiscoveryRes() message may include parameters such as an EVSEStatus parameter indicating the status of the EVSE 210, an EVSEProcessing parameter indicating whether or not the EVSE 210 has finished a processing that was initiated after a latest ChargeParameterDiscoveryRes() message or a progress of the processing, a Scheduled_CPDReqControlMode parameter containing a set of price information applicable for the scheduled control mode, a Dynamic_CPDReqControlMode parameter containing a set of price information applicable for the dynamic control mode, an AC_CPDResEnergyTransferMode parameter for initiating the target setting process for the AC charging, a DC_CPDResEnergyTransferMode parameter for initiating the target setting process for the DC charging, a BPT_AC_CPDResEnergyTransferMode parameter for initiating the target setting process for the AC bidirectional power transfer, a BPT_DC_CPDResEnergyTransferMode parameter for initiating the target setting process for the DC bidirectional power transfer, and a WPT_CPDResEnergyTransferMode parameter for initiating the target setting process for the wireless power transfer.

As shown in the schema diagram of FIG. 9, the ChargeParameterDiscoveryRes() message may include parameter elements related to a new energy demand presented by the EV user through the request to change the target power transfer amount, i.e., at least one element of the departure time (DepartureTime) indicating the termination time, a target SoC (TargetSoC), and a minimum SOC (MinimumSoC).

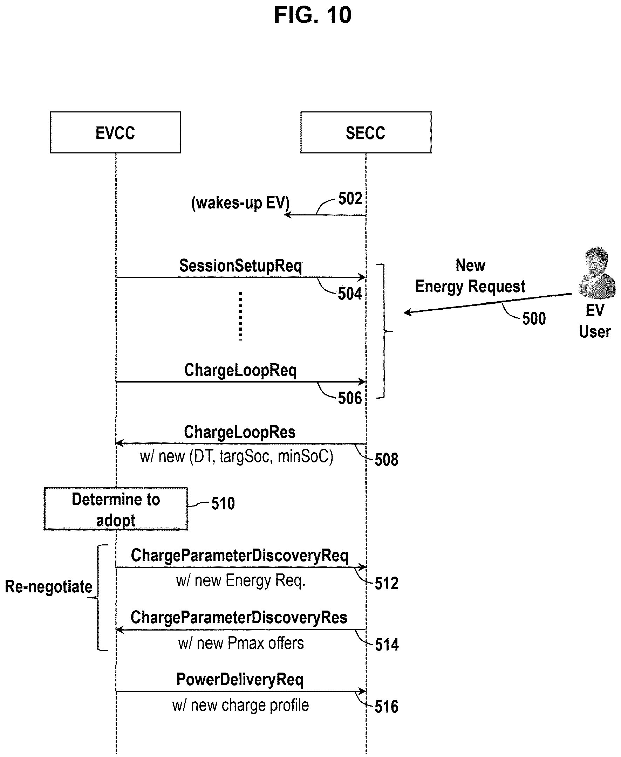

FIGS. 10 through 13 are sequence diagrams illustrating a process of changing the target power transfer amount according to exemplary embodiments of the present disclosure. The change of the target power transfer amount via the EVSE 110 according to the present disclosure may be performed before the charging starts or while the charging is paused, and may be made during an ongoing power transfer loop in which the charging or discharging is in progress in the EV while the EV device 110 and the EVSE 210 exchange messages.

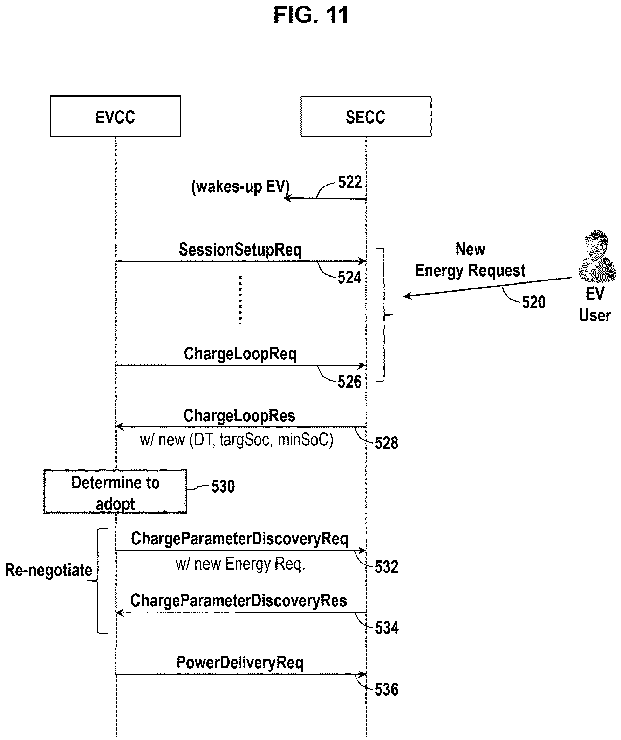

In an exemplary embodiment, the change of the target power transfer amount may be made before the charging session is initiated, before the EVCC 120 sends the ChargeParameterDiscoveryRes() message to the SECC 220, or when the charging is paused. FIG. 10 and 11 show the changing process according to such embodiments. Specifically, FIG. 10 shows the changing process in a state that the charging is paused in the scheduled control mode, and FIG. 11 shows the changing process in a state that the charging is paused in the dynamic control mode.

Referring to FIG. 10, when the SECC 220 receives a new energy request, that is, the request to change the target power transfer amount from an authenticated EV user while the EV charging is in a pause state in the scheduled control mode (step 500), the SECC 220 may wake up the EV device 110 by performing a certain wake-up procedure specified in Section 7.6.2.1 of an ISO 15118-3 standard dated May 15, 2015, for example (step 502). After the EV device 110 wakes up, the EVCC 120 may send the SECC 220 a SessionSetupReq message with a message header including the SessionID value of the paused communication session to resume the paused communication session (step 504).

After the communication session between the EVCC 120 and the SECC 220 is resumed, the EVCC 120 may send a ChargeParameterDiscoveryReq() message including previously set energy parameters to the SECC 220 to obtain a confirmation of the SECC 220 or may send updated charging parameters to perform a renegotiation procedure with the SECC 220 (step 506).

In particular, according to an exemplary embodiment of the present disclosure, the SECC 220 may forward, to the EVCC 120, the information about the target power transfer amount of the EV user directly input to the EVSE 210 or received through the secondary actor to set the new energy request presented by the EV user as a new target power transfer amount after a re-negotiation with the EVCC 120 (steps 508-514).

Specifically, in step 508, the SECC 220 may send the EVCC 120 the ChargeParameterDiscoveryRes message, as a response to the ChargeParameterDiscoveryReq() message, including the new target power transfer amount requested by the EV user such as the departure time parameter, the target SoC parameter, or the minimum SoC parameter.

In step 510, the EVCC 120 may determine whether or not to adopt the new target power transfer amount received from the SECC 220 based on the BPTControlMode parameter indicating whether the target change request through the EVSE 210 is allowed or not. In case the BPTControlMode parameter has a value of '1' indicating that the target change request through the EVSE 210 is not allowed, the EVCC 120 may ignore the new target power transfer amount value received from the SECC 220. On the other hand, in case the BPTControlMode parameter has a value of '2' indicating that the target change request through the EVSE 210 is allowed, the EVCC 120 may proceed with a re-negotiation with the SECC 220 to replace an existing energy parameter with the new target power transfer amount value received from the SECC 220.

During the re-negotiation, the EVCC 120 may send the SECC 220 the ChargeParameterDiscoveryReq() message including the new target power transfer amount value provided by the SECC 220, and the SECC 220 may respond with the ChargeParameterDiscoveryRes() message including an offer for a maximum charging power profile PMax (steps 512 and 514). Subsequently, the EVCC 120 may send the SECC 220 the power delivery request message PowerDeliveryReq() including the new charging power profile (step 516), and the SECC 220 may respond to the EVCC 120 with the power delivery response message PowerDeliveryRes(). As a result, the power transfer may be performed according to a new schedule including the charging power profile.

In an alternative embodiment, the determination in the step 510 of whether or not to adopt the new target power transfer amount received from the SECC 220 based on the BPTControlMode parameter may be performed by the SECC rather than the EVCC 120. That is, when the SECC 220 receives the request of the EV user to change the target power transfer amount through the secondary actor or directly from the EV user in a state of temporarily storing the BPTControlMode parameter received from the EVCC 120, the SECC 220 may determine whether to adopt the new target power transfer amount based on the BPTControlMode parameter. The SECC 220 may forward the received target power transfer amount to the EVCC 120 only when the SECC 220 determined to adopt the received target power transfer amount.

When the change of the target power transfer amount is completed, the SECC 212 may take into account only the final target power transfer amount while ignoring the previous target before the change. Meanwhile, since repeated requests to change the target power transfer amount and update of the target energy may cause a delay in the charging loop, a third negotiation may be prohibited to prevent a delay in the charging loop that may be caused by repeated requests to change the target power transfer amount and updates of the target energy.

Referring to FIG. 11, when the SECC 220 receives the request to change the target power transfer amount from an authenticated EV user while the EV charging is in a pause state in the dynamic control mode (step 520), the SECC 220 may wake up the EV device 110 by performing the wake-up procedure (step 522). After the EV device 110 wakes up, the EVCC 120 may send the SECC 220 a SessionSetupReq message with a message header including the SessionID value of the paused communication session to resume the paused communication session (step 524).

After the communication session between the EVCC 120 and the SECC 220 is resumed, the EVCC 120 may send the ChargeParameterDiscoveryReq() message including previously set energy parameters to the SECC 220 to obtain the confirmation of the SECC 220 or may send updated charging parameters to perform the renegotiation procedure with the SECC 220 (step 526).

In particular, according to an exemplary embodiment of the present disclosure, the SECC 220 may forward, to the EVCC 120, the information about the target power transfer amount of the EV user directly input to the EVSE 210 or received through the secondary actor to set the target power transfer amount requested by the EV user as a new energy parameter after a re-negotiation with the EVCC 120 (steps 528-534).

Specifically, in step 528, the SECC 220 may send the EVCC 120 the ChargeParameterDiscoveryRes message, as the response to the ChargeParameterDiscoveryReq() message, including the new target power transfer amount requested by the EV user. At this time, the new target power transfer amount may be the target SOC parameter or the minimum SOC parameter, and the departure time parameter may already be included in the ChargeParameterDiscoveryRes() message.

In step 530, the EVCC 120 may determine whether or not to adopt the new target power transfer amount received from the SECC 220 based on the BPTControlMode parameter. In case the BPTControlMode parameter has the value of '1' indicating that the target change request through the EVSE 210 is not allowed, the EVCC 120 may ignore the new target power transfer amount value received from the SECC 220. On the other hand, in case the BPTControlMode parameter has the value of '2' indicating that the target change request through the EVSE 210 is allowed, the EVCC 120 may proceed with a re-negotiation with the SECC 220 to replace an existing energy parameter with the new target power transfer amount value received from the SECC 220.

During the re-negotiation, the EVCC 120 may send the SECC 220 the ChargeParameterDiscoveryReq() message including the new target power transfer amount value provided by the SECC 220, and the SECC 220 may respond with the ChargeParameterDiscoveryRes() message (steps 532 and 534).

Afterwards, the EVCC 120 may send the SECC 220 the power delivery request message PowerDeliveryReq() (step 536), and the SECC 220 may respond to the EVCC 120 with the power delivery response message PowerDeliveryRes(), and the power transfer to the EV device 110 may be performed. According to the present embodiment, a new charging power profile including the maximum charging power profile PMax is determined by the SECC 220, and the charging may be carried out according to the schedule determined by the SECC 220.

In an alternative embodiment, the determination in the step 530 of whether or not to adopt the new target power transfer amount received from the SECC 220 based on the BPTControlMode parameter may be performed by the SECC rather than the EVCC 120. That is, when the SECC 220 receives the request of the EV user to change the target power transfer amount through the secondary actor or directly from the EV user in the state of temporarily storing the BPTControlMode parameter received from the EVCC 120, the SECC 220 may determine whether to adopt the new target power transfer amount based on the BPTControlMode parameter. The SECC 220 may forward the received target power transfer amount to the EVCC 120 only when the SECC 220 determined to adopt the received target power transfer amount.

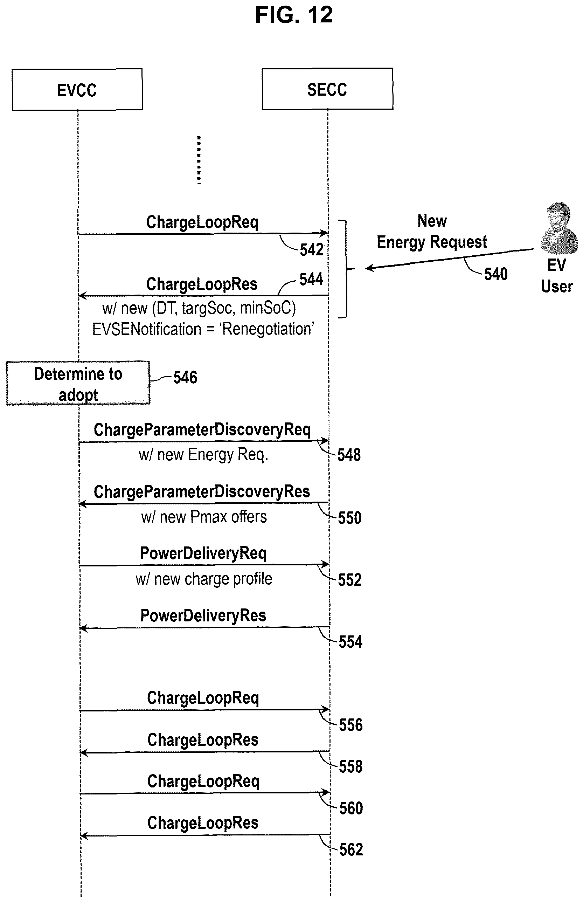

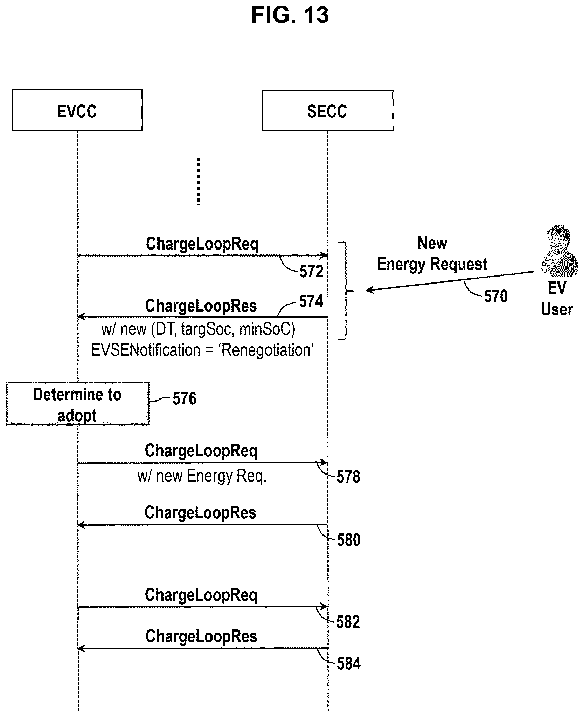

In another embodiments of the present disclosure, the change of the target power transfer amount may be made during the power transfer loop. FIGS. 12 and 13 illustrates such embodiments. In detail, FIG. 12 shows the changing process when the charging loop is in progress in the scheduled control mode, and FIG. 13 shows the changing process when the charging loop is in progress in the dynamic control mode.

Referring to 12, while the charging loop is in progress in the scheduled control mode, the EVCC 120 and the SECC 220 may exchange a ChargeLoopReq/Res message pair or a ChargingStatusReq/Res message pair to check a meter value measured by the power meter 238 of the EVSE 210 and keep a communication session alive.

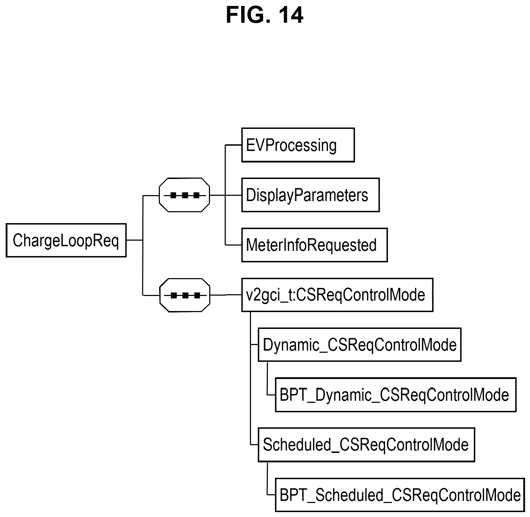

As shown in a schema diagram of FIG. 14, the ChargeLoopReq() message may include DisplayParameters which are parameters that can be displayed on the EVSE 210 or another device connected directly or indirectly to the EVSE 210, a MeterInfoRequested parameter indicating whether the meter value is requested or not, a Dynamic_{CS|CD} ReqControlMode parameter to provide and set parameters for the dynamic mode charging, a BPT_Dynamic_{CS|CD} ReqControlMode parameter to provide and set parameters for the dynamic mode BPT, a Scheduled_{CS|CD}ReqControlMode parameter to provide and set parameters for the scheduled mode charging, a BPT_Scheduled_{CS|CD}ReqControlMode parameter to provide and set parameters for the scheduled mode BPT.

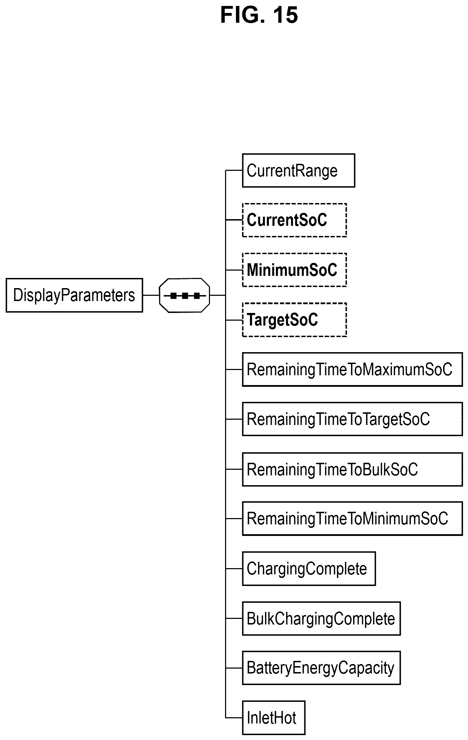

As shown in the schema diagram of FIG. 15, the DisplayParameters element may include CurrentRange indicating an expected distance range that the EV can travel with the current SoC, RemainingTimeToMaximumSOC indicating a remaining time required to reach the maximum SoC, RemainingTimeToTargetSOC indicating a remaining time required to reach the target SoC, RemainingTimeToBulkSOC indicating a remaining time required to reach a bulk SoC, RemainingTimeToMinimumSOC indicating a remaining time required to reach the minimum SoC, ChargingComplete indicating if the charging is complete from a viewpoint of the EV, BulkChargingComplete indicating if a fast charging is complete from a viewpoint of the EV, BatteryEnergyCapacity indicating a calculated amount of the electrical energy stored in the battery in KWh when the displayed SoC equals to 100%, and InletHot indicating that an inlet temperature is too high to accept a specific operating condition.

In particular, according to the present disclosure, the DisplayParameters may include the target SoC (TargetSoC) in addition to the current SoC (CurrentSoC) and the minimum SoC (MinimumSoC) indicating a minimum level of the SoC required by the EV after the charging. When the BPTControlMode parameter is set to '2' by the EV user, the elements of the DisplayParameters including the CurrentSoC, MinimumSoC, and TargetSoC may be provided to the EV user through the secondary actor or directly at the EVSE 210 before or after the change of the target power transfer amount or regardless of the change.

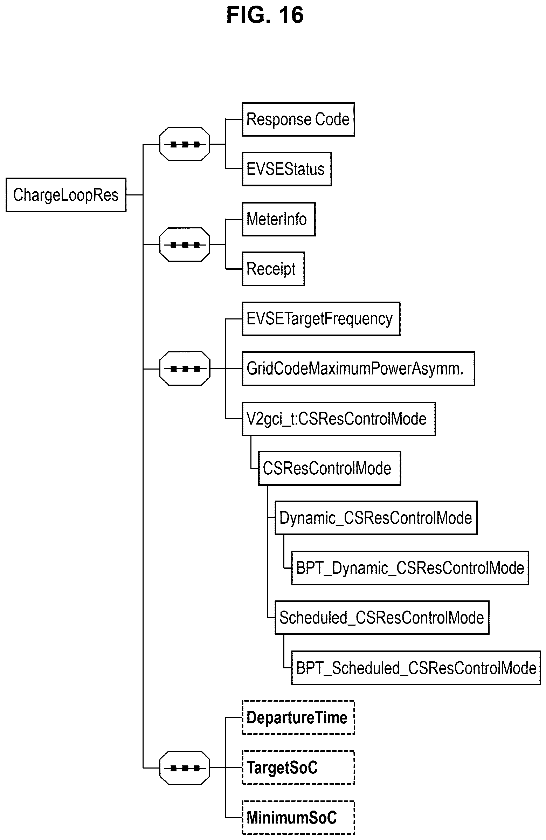

Meanwhile, as shown in the schema diagram of FIG. 16, the ChargeLoopRes() message may include an EVSEStatus parameter indicating the status of the EVSE 210, a MeterInfo parameter indicating the energy charged during a current service session, an EVSETargetFrequency parameter indicating a target frequency requested by the EVSE, a Dynamic_{CS|CD}ResControlMode parameter to provide and set parameters for the dynamic mode charging, a BPT_Dynamic_{CS|CD}ResControlMode parameter to provide and set parameters for the dynamic mode BPT, a Scheduled_{CS|CD}ResControlMode to provide and set parameters for the scheduled mode charging, and a BPT_Scheduled_{CS|CD}ResControlMode parameter to provide and set parameters for scheduled mode BPT. In addition, the ChargeLoopRes() message may include an EVSENotification parameter indicating an action that the SECC 220 wants the EVCC 120 to perform. The EVSENotification parameter is an enumerated type parameter and may have a value such as "StopCharging", "Renegotiation", "ServiceRenegotiation", "Pause", or "Terminate".

In particular, according to the present disclosure, the ChargeLoopRes() message may include parameter elements related to the new energy requested presented by the EV user through the request to change the target power transfer amount, i.e., the departure time (DepartureTime) indicating the termination time for the charging process, the target SoC ( TargetSoC), and the minimum SOC (MinimumSoC) elements.

Referring to FIG. 12, upon receiving the request to change the target power transfer amount from an authenticated EV user during the charging loop (step 540), the SECC 220 may send the EVCC 120 a ChargeLoopRes() message, which is a response message to the ChargeLoopReq() message, including the new target power transfer amount included in the request to change the target power transfer amount of the EV user, e.g., the departure time, the target SoC, or the minimum SoC (steps 542 and 544). At this time, the SECC 220 may set the value of the EVSENotification parameter in the ChargeLoopRes() message to "Renegotiation" to trigger a renegotiation in the schedule control mode.

In step 546, the EVCC 120 may determine whether or not to adopt the new target power transfer amount received from the SECC 220 based on the BPTControlMode parameter. In case the BPTControlMode parameter has the value of '1' indicating that the target change request through the EVSE 210 is not allowed, the EVCC 120 may ignore the new target power transfer amount value received from the SECC 220. On the other hand, in case the BPTControlMode parameter has the value of '2' indicating that the target change request through the EVSE 210 is allowed, the EVCC 120 may proceed with a re-negotiation with the SECC 220 to replace an existing energy parameter with the new target power transfer amount value received from the SECC 220.

In detail, upon receiving the ChargeLoopRes() message in which the value of the EVSENotification parameter is set to "Renegotiation", the EVCC 120 may send the SECC 220 the ChargeParameterDiscoveryReq() message including the new target power transfer amount value provided by the SECC 220 (step 548). In response to the ChargeParameterDiscoveryReq() message, the SECC 220 may send the EVCC 120 the ChargeParameterDiscoveryRes() message including the maximum charging power profile (PMax), for example (step 550). Subsequently, the EVCC 120 may transmit the power delivery request (PowerDeliveryReqQ) message including a new charging power profile to the SECC 220 (step 552), and the SECC 220 may respond to the EVCC 120 with the power delivery response (PowerDeliveryRes()) message (step 554). Accordingly, the power transfer may be performed according to the schedule including the charging power profile.

According to the present embodiment, the steps 548-554 may be performed in a state that the exchange of the ChargeLoopReq/Res message pair between the EVCC 120 and the SECC 220 is stopped. However, the steps 548-554 may be performed by multiplexed communications between the EVCC 120 and the SECC 220 while the exchange of the ChargeLoopReq/Res message pair between the EVCC 120 and the SECC 220 is performed separately.

The EVCC 120 and the SECC 220 may keep the communication session alive by continuing the exchange of the ChargeLoopReq/Res message pair, so that the charging of the EV 100 may continue (steps 556-562).

Referring to FIG. 13, while the charging loop is in progress in the dynamic control mode, the EVCC 120 and the SECC 220 may exchange the ChargeLoopReq/Res message pair or the ChargingStatusReq/Res message pair to check the meter value measured by the power meter 238 of the EVSE 210 and keep the communication session alive.

Upon receiving the request to change the target power transfer amount from an authenticated EV user during the charging loop (step 570), the SECC 220 may send the EVCC 120 a ChargeLoopRes() message, which is a response message to the ChargeLoopReq() message, including the new target power transfer amount included in the request to change the target power transfer amount of the EV user, e.g., the departure time, the target SoC, or the minimum SoC (steps 572 and 574).

In step 576, the EVCC 120 may determine whether or not to adopt the new target power transfer amount received from the SECC 220 based on the BPTControlMode parameter. In case the BPTControlMode parameter has the value of '1' indicating that the target change request through the EVSE 210 is not allowed, the EVCC 120 may ignore the new target power transfer amount value received from the SECC 220. On the other hand, in case the BPTControlMode parameter has the value of '2' indicating that the target change request through the EVSE 210 is allowed, the EVCC 120 may proceed with a re-negotiation with the SECC 220 to replace an existing energy parameter with the new target power transfer amount value received from the SECC 220.

That is, the EVCC 120 may send the ChargeLoopReq() message including the new target power transfer amount value provided by the SECC 220 to the SECC 220 (step 578), and the SECC 220 may determine a new charging power profile taking into account an internal schedule of the EVCC 210. The EVCC 120 and the SECC 220 may keep the communication session alive by continuing the exchange of the ChargeLoopReq/Res message pair, so that the charging of the EV 100 may continue (steps 580-584).

According to the embodiments shown in FIGS. 10 to 13, the EVCC 120 may determine whether to adopt the new energy request received from the SECC 220 as the target power transfer amount based on the BPTControlMode parameter. If the energy request is changed before the charging loop, the EVCC 120 and the SECC 220 may reset the target power transfer amount through a re-negotiation. If the energy request is changed while the charging loop is in progress, the EVCC 120 and the SECC 220 may re-negotiate in case of the scheduled control mode. In case of the dynamic control mode, however, the EVCC 120 may send the SECC 220 the new target power transfer amount corresponding to the energy request received from the SECC 220, and the SECC 220 may determine the new charging power profile in consideration of the internal schedule of the EVSE 210.

To perform such a process, the ChargeParameterDiscoveryRes() message transmitted by the EVCC 120 to the SECC 220 may include elements such as the DepartureTime, TargetSoC, and MinimumSoC. The ChargeLoopResQ message sent by the SECC 220 to the EVCC 120 may include elements the same as or similar to those elements. However, information exchanged between the EVCC 120 and the SECC 220 to implement the method of the present disclosure or the message carrying such information is not limited thereto.

Meanwhile, according to an exemplary embodiment of the present disclosure, when the SECC 220 transmits the new energy request to be set as the target power transfer amount to the EVCC 120, the SECC 220 may specify an acknowledgment time limit in the CSResControlMode parameter in the ChargeLoopRes() message shown in FIG. 16 to request the EVCC to respond with information indicating whether the EVCC 120 has completed changing the target power transfer amount within the confirmation time limit. In case the acknowledgment time limit is specified in the ChargeLoopRes() message from the SECC 220, the EVCC 120 may send the SECC 220 an acknowledgment of the change of the target power transfer amount within the acknowledgment time limit.

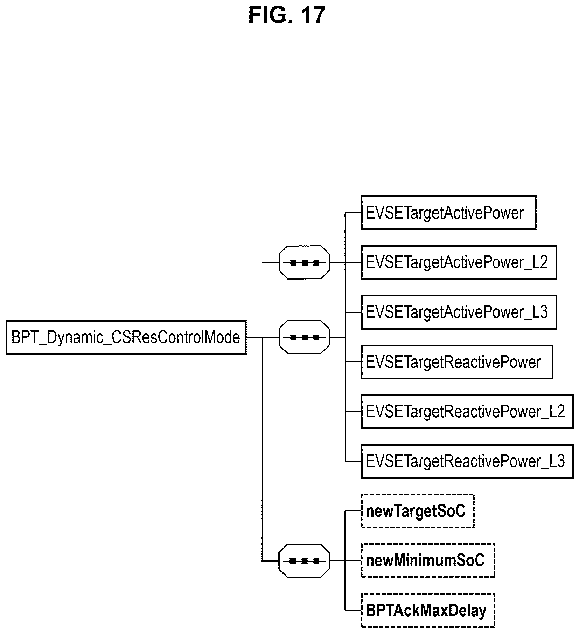

For example, the SECC 220 may transmit a CSResControlMode parameter, i.e., a BPT_Dynamic_CSResControlMode parameter in the AC_BPT energy transfer mode. As shown in FIG. 17, the BPT_Dynamic_CSResControlMode parameter may include a NewTargetSoC element indicating a value or an existence of a new target SoC and/or a NewMinimumSoC element indicating a value or an existence of a new minimum SoC. In case that the NewTargetSoC element or the NewMinimumSoC element is included in the BPT_Dynamic_CSResControlMode parameter, the parameter may also include a BPTAckMaxDelay element. The BPTAckMaxDelay element indicates a time, expressed in seconds, in which the acknowledgment is required from a point in time that the message is sent.

If the BPTAckMaxDelay element is included in the ChargeLoopRes() message sent by the SECC 220 to the EVCC 120, the EVCC 120 may confirm the change of the target power transfer amount by sending information such as 'New TargetSoC Accepted' or 'New MinimumSoC Accepted', for example, to the SECC 220. The information may be conveyed, for example, through a reserved field in a subsequent ChargeLoopReq() message. Owing to the acknowledgement of the EVCC 120 within a certain period of time, the SECC 220 may inform the change of the target power transfer amount to the EV user within a short period of time.

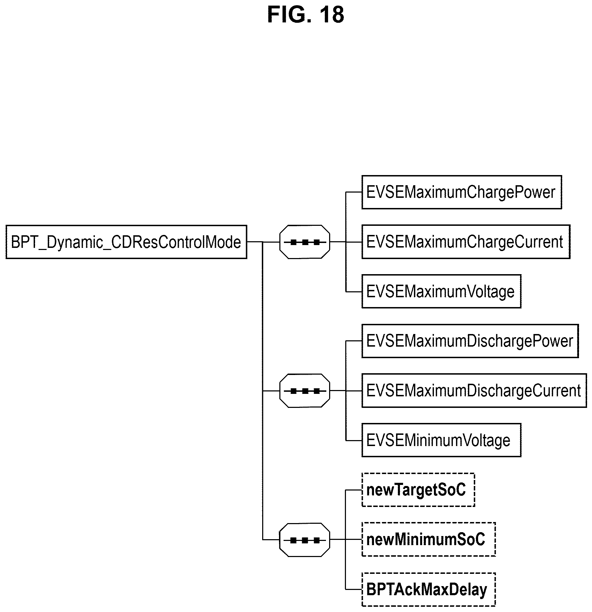

Also in the DC_BPT energy transfer mode, the SECC 220 may transmit the CDResControlMode parameter, i.e., the BPT_Dynamic_CDResControlMode parameter. As shown in FIG. 18, the BPT_Dynamic_CDResControlMode parameter may include the NewTargetSoC element indicating the value or the existence of the new target SoC and/or the NewMinimumSoC element indicating the value or the existence of the new minimum SoC. In case the NewTargetSoC element or the NewMinimumSoC element is included in the BPT_Dynamic_CSResControlMode parameter, the parameter may also include the BPTAckMaxDelay element. The BPTAckMaxDelay element indicates the time, expressed in seconds, in which the acknowledgment is be made from a point in time that the message is sent.

Although the examples in the AC_BPT energy transfer mode and the DC_BPT energy transfer mode have been described above, the acknowledgement of the change is applicable to other energy transfer modes, that is, AC, DC, WPT, AC_ACD, DC_ACD, WPT_ACD, WPT_BPT, AC_ACD_BPT, DC_ACD_BPT, and WPT_ACD_BPT modes.

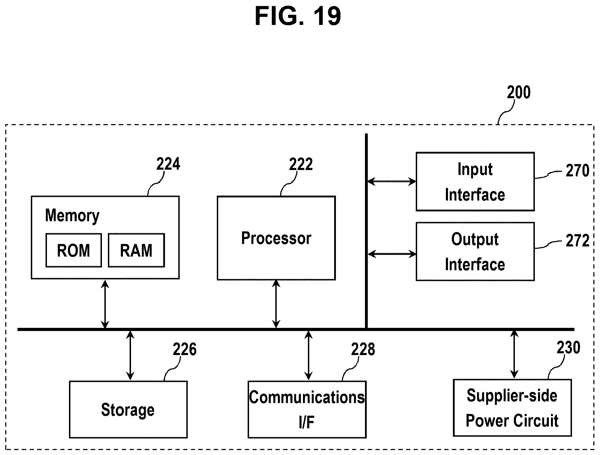

FIG. 19 is a block diagram of the charging station 200 according to an exemplary embodiment of the present disclosure. The charging station 200 may include at least one processor 222, a memory 224, a storage device 226, a communication interface 228, the supply-side power circuit 230, an input interface device 270, and an output interface device 272. Among the components of the charging station 200, at least some of the components including the processor 222 and the memory 224 may be connected by a bus to exchange data. The charging station 200 may be configured based on the EVSE 210 shown in FIG. 2 or 3. The processor 222, memory 224, and program instructions executed by the processor 222 may implement the SECC 220 of the EVSE 210.

The processor 222 may execute program instructions stored in the memory 224 and/or the storage 226. The processor 222 may be at least one central processing unit (CPU), a graphics processing unit (GPU), or any other kind of dedicated processor suitable for performing the processes according to the present disclosure.

The memory 224 may include, for example, a volatile memory such as a read only memory (ROM) and a nonvolatile memory such as a random access memory (RAM). The memory 224 may load the program instructions stored in the storage 226 to provide to the processor 222, so that the processor 222 execute the program instructions.

The storage 226 may include an intangible recording medium suitable for storing the program instructions and data files. Any device capable of storing data that may be readable by a computer system may be used for the storage. Examples of the storage medium may include magnetic media such as a hard disk, a floppy disk, and a magnetic tape, optical media such as a compact disk read only memory (CD-ROM) and a digital video disk (DVD), magneto-optical medium such as a floptical disk, and semiconductor memories such as ROM, RAM, a flash memory, and a solid-state drive (SSD).

When executed by the processor 222, the program instructions may cause the processor 222 to: set the target power transfer amount in response to a request of the EV; allow an access of an EV user through a path not passing the EV; receive a change request for changing the target power transfer amount from the EV user through the path; transmit, to the EV, a predetermined message including a new energy request included in the change request; receive, from the EV, a parameter setting message designating the new energy request as a new target power transfer amount; and allow a power transfer to be performed according to a changed target power transfer amount.

The communication interface 228 includes the WLAN interface, the PLC module 240, the P2PS controller 260, and the gateway 280, and the charging station 200 shown in FIG. 2 or 3 and enables the charging station 200 to communicate with external devices. The supply-side power circuit 230 may transfer the electrical power from the power grid to the EV 100 or from the EV 100 to the power grid under a control of program instructions executed by the processor 222. The input interface device 270 allows an operator or the EV user to input operation commands or information, and the output interface device 272 displays an operating state or processing result of the charging station 200. The input interface device 270 allows the EV user to directly input the request to change the target power transfer amount while the method of changing the target power transfer amount according to the present disclosure is performed, and the output interface device 272 may display a result of the change request.

As mentioned above, the apparatus and method according to exemplary embodiments of the present disclosure can be implemented by computer-readable program codes or instructions stored on a computer-readable intangible recording medium. The computer-readable recording medium includes all types of recording device storing data which can be read by a computer system. The computer-readable recording medium may be distributed over computer systems connected through a network so that the computer-readable program or codes may be stored and executed in a distributed manner.

The computer-readable recording medium may include a hardware device specially configured to store and execute program instructions, such as a ROM, RAM, and flash memory. The program instructions may include not only machine language codes generated by a compiler, but also high-level language codes executable by a computer using an interpreter or the like.

Some aspects of the present disclosure described above in the context of the apparatus may indicate corresponding descriptions of the method according to the present disclosure, and the blocks or devices may correspond to operations of the method or features of the operations. Similarly, some aspects described in the context of the method may be expressed by features of blocks, items, or devices corresponding thereto. Some or all of the operations of the method may be performed by use of a hardware device such as a microprocessor, a programmable computer, or electronic circuits, for example. In some exemplary embodiments, one or more of the most important operations of the method may be performed by such a device.

In some exemplary embodiments, a programmable logic device such as a field-programmable gate array may be used to perform some or all of the functions of the methods described herein. The field-programmable gate array may be operated along with a microprocessor to perform one of the methods described herein. In general, the methods may be performed preferably by a certain hardware device.

While the present disclosure has been described above with respect to exemplary embodiments thereof, it will be apparent to those skilled in the art that various changes and modifications may be made without departing from the spirit and scope of the present disclosure defined in the following claims.

**Claims**

1. A method of changing a target power transfer amount, comprising:

   receiving a change request for changing the target power transfer amount;
   transmitting, to the EV, a predetermined message including a new energy request included in the change request;
   receiving, from the EV, a parameter setting message designating the new energy request as a new target power transfer amount; and
   allowing a power transfer to be performed according to a new target power transfer amount.

2. The method of claim 1, wherein the target power transfer amount is one selected from: a departure time, a target state of charge, or a minimum state of charge.

3. The method of claim 1, wherein receiving the parameter setting message comprises:
   re-negotiating a charging profile with the EV.

**4.** The method of claim 1, wherein re-negotiating the charging profile with the EV comprises:
transmitting a parameter setting response message including an offer for a maximum charging power to the EV in response to the parameter setting message.

**5.** The method of claim 1, further comprising:
providing the target power transfer amount to the EV user through the path before receiving the request for changing the target power transfer amount.

**6.** The method of claim 1, further comprising:

receiving, from the EV, a predetermined configuration parameter indicating a permission of a change through the path before receiving the request for changing the target power transfer amount,
wherein transmitting the predetermined message including the new energy request comprises:

checking the permission for the EV based on the configuration parameter;
transmitting the predetermined message to the EV when the change through the path is permitted for the EV; and
ignoring the change request when the change through the path is not permitted for the EV.

**7.** The method of claim 1, wherein transmitting the predetermined message including the new energy request comprises:

specifying a predetermined acknowledgement time limit in the predetermined message so that the EV transmits a change acknowledgement within the acknowledgement time limit,
the method further comprising:
notifying the EV user of a completion of the change after receiving the change acknowledgement from the EV.

**8.** The method of claim 1, wherein an access request and the change request of the EV user is received through an external device capable of connecting to the charging station through a predetermined network.

**9.** The method of claim 1, wherein the charging station directly receives an access request and the change request of the EV user from the EV user through a user interface of the charging station.

**10.** A charging station apparatus for transferring electrical power to or from an electric vehicle (EV), comprising:

a memory having program instructions stored therein; and
a processor coupled to the memory and configured to execute the program instructions stored in the memory,
wherein the program instructions, when executed by the processor, causes the processor to:

set the target power transfer amount in response to a request of the EV;
allow an access of an EV user through a path not passing the EV;
receive a change request for changing the target power transfer amount from the EV user through the path;
transmit, to the EV, a predetermined message including a new energy request included in the change request;
receive, from the EV, a parameter setting message designating the new energy request as a new target power transfer amount; and
allow a power transfer to be performed according to a new target power transfer amount.

**11.** The charging station apparatus of claim 10, wherein the target power transfer amount is one selected from: a departure time, a target state of charge, and a minimum state of charge.

**12.** The charging station apparatus of claim 10, wherein the program instructions causing the processor to receive the parameter setting message configured to cause the processor to:
re-negotiate a charging profile with the EV.

**13.** The charging station apparatus of claim 12, wherein the program instructions are configured to cause the processor to re-negotiate the charging profile with the EV configured to cause the processor to:
transmit a parameter setting response message including an offer for a maximum charging power to the EV in response to the parameter setting message.

**14.** The charging station apparatus of claim 10, wherein the program instructions further causes the processor to:
provide the target power transfer amount to the EV user through the path before receiving the request for changing the target power transfer amount.

**15.** The charging station apparatus of claim 10, wherein the program instructions are further configured to cause the processor to:

receive, from the EV, a predetermined configuration parameter indicating a permission of a change through the path before receiving the request for changing the target power transfer amount,
wherein the program instructions causing the processor to transmit the predetermined message including the new energy request further causes the processor to:

check the permission for the EV based on the configuration parameter;
transmit the predetermined message to the EV when the change through the path is permitted for the EV; and
ignore the change request when the change through the path is not permitted for the EV.

**16.** The charging station apparatus of claim 10, wherein the program instructions causing the processor to transmit the predetermined message including the new energy request causes the processor to:

specify a predetermined acknowledgement time limit in the predetermined message so that the EV transmits a change acknowledgement within the acknowledgement time limit,
wherein the program instructions further causes the processor to:
notify the EV user of a completion of the change after receiving the change acknowledgement from the EV.

**17.** The charging station apparatus of claim 10, wherein an access request and the change request of the EV user is received through an external device capable of connecting to the charging station through a predetermined network.

**18.** The charging station apparatus of claim 10, wherein the charging station apparatus further comprises:
a user interface configured to directly receive an access request and the change request of the EV user from the EV user.

**19.** A method of changing target power transfer amount in an electric vehicle (EV), comprising:

providing an input target power transfer amount designated by an EV user to a charging station to set the target power transfer amount;
determining whether or not to permit a change through a path passing the charging station without passing the EV according to a settings set by the EV user;
receiving, from the charging station, a predetermined message including a new energy request presented to the charging station by the EV user through the path; and
checking a permission and, when the change through the path is not permitted for the EV, transmitting a parameter setting message designating the new energy request as a new target power transfer amount to the charging station so that the target power transfer amount is changed.

**20.** The method of claim 19, wherein checking the permission comprises:
transmitting a predetermined configuration parameter including permission information to the charging station.

# FIG. 1

EP 4 166 380 A1

# FIG. 2

EP 4 166 380 A1

# FIG. 3

# FIG. 4

Start

**400**

Establish IP-based connection between EVCC and SECC

**402**

Establish TLS session

**404**

Identify, authenticate, and approve

**406**

Set target and establish charging schedule

**408**

Charge (Control charging and adjust charging schedule)

Stop

# FIG. 5

EV Maximum Energy Level

EVMaximumEnergyReq

EV Target Energy Level

EVTargetEnergyReq

EV Present Energy Level

EVMinimumEnergyReq

EV Minimum Energy Level

Energy Level

Now    Departure Time    Time

# FIG. 6

| Parameter Name | Parameter Type | Value |
|----------------|----------------|-------|
| BPTControlMode | intValue | 1 (BPT control by EVSE not allowed)<br>2 (BPT control by EVSE allowed) |

# FIG. 7

```
                        ┌──────────┐
                        │  Start   │
                        └────┬─────┘
                             │
        ┌────────────────────┤
        │                    ▼                              420
      ┌─┴─┐    ╱───────────────────────────────────────────╲
      │No │   ╱  Is BPTControlMode parameter setting menu    ╲
      └───┘   ╲              selected?                        ╱
               ╲───────────────────┬───────────────────────╱
                                   │ Yes
                                   ▼                          422
                        ┌──────────────────────┐
                        │  Display setting screen│
                        └──────────┬─────────────┘
                                   │
        ┌──────────────────────────┤
        │                          ▼              S424
      ┌─┴─┐        ╱─────────────────────────────╲
      │No │       ╱        Selected?               ╲
      └───┘       ╲─────────────┬──────────────────╱
                                │ Yes
                                ▼                             426
                     ┌──────────────────────────────┐
                     │  Store selected parameter value│
                     └──────────┬─────────────────────┘
                                │
                                ▼
                        ┌──────────┐
                        │   Stop   │
                        └──────────┘
```

# FIG. 8

| Parameter Name | Parameter Type | Value |
|---|---|---|
| MobilityNeedPriority | Enumeration | EV (Mobility Need from EV has higher priority)<br>EVSE (Mobility Need from EVSE has higher priority) |

# FIG. 9

```
                                                    ┌─────────────────────┐
                                              ┌─────│ Response Code       │
                                    ╔═══════╗ │     └─────────────────────┘
                                    ║ ■■■   ║─┤
                                    ╚═══════╝ │     ┌─────────────────────┐
                                              └─────│ EVSEStatus          │
┌─────────────────────────────┐                     └─────────────────────┘
│ ChargeParameterDiscoveryRes │─┐
└─────────────────────────────┘ │                   ┌─────────────────────┐
                                │             ┌─────│ EVSEProcessing      │
                                │   ╔═══════╗ │     └─────────────────────┘
                                ├──║ ■■■   ║─┤
                                │   ╚═══════╝ │     ┌─────────────────────────┐
                                │             └─────│ v2gci_t:CPDResControlMode│
                                │                   └─────────────────────────┘
```

Response Code

EVSEStatus

EVSEProcessing

v2gci_t:CPDResControlMode

Scheduled_CPDResControlMode

Dynamic_CPDResControlMode

v2gci_t:CPDResEnergyTransferMode

ACD_CPDResEnergyTransferMode

AC_CPDResEnergyTransferMode

BPT_ AC_CPDResEnergyTransferMode

DC_CPDResEnergyTransferMode

BPT_ DC_CPDResEnergyTransferMode

WPT_Scheduled_CSResControlMode

**DepartureTime**

**TargetSoC**

**MinimumSoC**

# FIG. 10

EVCC

SECC

(wakes-up EV) 502

SessionSetupReq 504

⋮

ChargeLoopReq 506

New Energy Request 500

EV User

ChargeLoopRes
w/ new (DT, targSoc, minSoC) 508

Determine to adopt 510

Re-negotiate

ChargeParameterDiscoveryReq
w/ new Energy Req. 512

ChargeParameterDiscoveryRes
w/ new Pmax offers 514

PowerDeliveryReq
w/ new charge profile 516

# FIG. 11

# FIG. 12

```
┌──────────┐                      ┌──────────┐
│   EVCC   │                      │   SECC   │
└──────────┘                      └──────────┘
     ┊                                 ┊
     ┊              ⋮                  ┊
     ┊                                 ┊
     │      ChargeLoopReq              │                    New
     │───────────────────────────────▶│            Energy Request
     │                          ╲542   │                                    EV
     │      ChargeLoopRes     ╱544     │◀──────────────        540         User
     │◀───────────────────────────────│
     │ w/ new (DT, targSoc, minSoC)    │
     │ EVSENotification = 'Renegotiation' │
```

┌─────────────────┐
│  Determine to   │──546
│     adopt       │
└─────────────────┘

```
     │   ChargeParameterDiscoveryReq   │
     │───────────────────────────────▶│
     │        w/ new Energy Req.    ╲──548
     │                                 │
     │   ChargeParameterDiscoveryRes   │
     │◀───────────────────────────────│
     │        w/ new Pmax offers    ╲──550
     │                                 │
     │       PowerDeliveryReq          │
     │───────────────────────────────▶│
     │       w/ new charge profile  ╲──552
     │                                 │
     │       PowerDeliveryRes          │
     │◀───────────────────────────────│
     │                              ╲──554
     │                                 │
     │       ChargeLoopReq             │
     │───────────────────────────────▶│
     │                              ╲──556
     │       ChargeLoopRes             │
     │◀───────────────────────────────│
     │                              ╲──558
     │       ChargeLoopReq             │
     │───────────────────────────────▶│
     │                              ╲──560
     │       ChargeLoopRes             │
     │◀───────────────────────────────│
     │                              ╲──562
     ┊                                 ┊
```

# FIG. 13

```
┌──────────┐                    ┌──────────┐
│   EVCC   │                    │   SECC   │
└──────────┘                    └──────────┘
```

ChargeLoopReq
                                        ‑572          New
                                                Energy Request
ChargeLoopRes        574                                        ‑570        EV
w/ new (DT, targSoc, minSoC)                                              User
EVSENotification = 'Renegotiation'

┌─────────────────┐
│  Determine to   │‑576
│     adopt       │
└─────────────────┘

ChargeLoopReq
w/ new Energy Req.    ‑578

ChargeLoopRes
                      ‑580

ChargeLoopReq
                      ‑582
ChargeLoopRes
                      ‑584

# FIG. 14

# FIG. 15

# FIG. 16

# FIG. 17

BPT_Dynamic_CSResControlMode

EVSETargetActivePower

EVSETargetActivePower_L2

EVSETargetActivePower_L3

EVSETargetReactivePower

EVSETargetReactivePower_L2

EVSETargetReactivePower_L3

newTargetSoC

newMinimumSoC

BPTAckMaxDelay

# FIG. 18

# FIG. 19

## INTERNATIONAL SEARCH REPORT

| International application No. |
| --- |
| **PCT/KR2021/008969** |

### A.    CLASSIFICATION OF SUBJECT MATTER

**B60L 53/66**(2019.01)i; **B60L 53/62**(2019.01)i; **B60L 58/12**(2019.01)i; **H02J 50/10**(2016.01)i; **H02J 50/80**(2016.01)i; **H02J 7/00**(2006.01)i

According to International Patent Classification (IPC) or to both national classification and IPC

### B.    FIELDS SEARCHED

Minimum documentation searched (classification system followed by classification symbols)

B60L 53/66(2019.01); B60L 11/18(2006.01); B60L 50/50(2019.01); G06Q 10/02(2012.01); G06Q 50/30(2012.01); H02J 7/00(2006.01); H02J 7/14(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 전기차(electric vehicle), 충전 스테이션(charging station), 목표 충전 레벨(target charging level), 변경 요청(change request), 에너지 요구량(energy requirement), 파라미터(parameter), 메시지(message), 접근 경로(access path), 허용(allowance)

### C.    DOCUMENTS CONSIDERED TO BE RELEVANT

| Category* | Citation of document, with indication, where appropriate, of the relevant passages | Relevant to claim No. |
| --- | --- | --- |
| A | KR 10-1346079 B1 (CLICKNTOUCH CO., LTD.) 31 December 2013 (2013-12-31) See paragraphs [0011], [0026] and [0033]-[0035]; claim 1; and figures 1-6. | 1-20 |
| A | KR 10-1753872 B1 (SOOMBI CO., LTD.) 04 July 2017 (2017-07-04) See claim 1; and figures 1-4. | 1-20 |
| A | KR 10-2019-0015986 A (HYUNDAI MOTOR COMPANY et al.) 15 February 2019 (2019-02-15) See claims 1-26; and figures 1-15. | 1-20 |
| A | KR 10-2020-0005917 A (KOREA ELECTRIC POWER CORPORATION) 17 January 2020 (2020-01-17) See claims 1-10; and figures 1 and 2. | 1-20 |
| A | US 9201407 B2 (CHARGEPOINT, INC.) 01 December 2015 (2015-12-01) See claims 1-17; and figures 1-10. | 1-20 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **20 October 2021** | **20 October 2021** |

| Name and mailing address of the ISA/KR | Authorized officer |
| --- | --- |
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

<table>
<tr><td colspan="2" align="center">**INTERNATIONAL SEARCH REPORT**<br>**Information on patent family members**</td><td>International application No.<br><br>**PCT/KR2021/008969**</td></tr>
</table>

| Patent document cited in search report | Publication date (day/month/year) | Patent family member(s) | Publication date (day/month/year) |
|---|---|---|---|
| KR    10-1346079    B1 | 31 December 2013 | KR   10-2013-0070976    A | 28 June 2013 |
| KR    10-1753872    B1 | 04 July 2017 | None | |
| KR   10-2019-0015986    A | 15 February 2019 | CN    110014905    A | 16 July 2019 |
| | | US    10500976    B2 | 10 December 2019 |
| | | US    2019-0039465    A1 | 07 February 2019 |
| KR   10-2020-0005917    A | 17 January 2020 | None | |
| US    9201407    B2 | 01 December 2015 | US    10252633    B2 | 09 April 2019 |
| | | US    10913372    B2 | 09 February 2021 |
| | | US    2010-0134067    A1 | 03 June 2010 |
| | | US    2011-0316482    A1 | 29 December 2011 |
| | | US    2013-0310999    A1 | 21 November 2013 |
| | | US    2014-0266046    A1 | 18 September 2014 |
| | | US    2016-0082856    A1 | 24 March 2016 |
| | | US    2017-0036558    A1 | 09 February 2017 |
| | | US    2018-0194240    A1 | 12 July 2018 |
| | | US    2020-0101859    A1 | 02 April 2020 |
| | | US    2021-0162881    A1 | 03 June 2021 |
| | | US    8013570    B2 | 06 September 2011 |
| | | US    8502500    B2 | 06 August 2013 |
| | | US    9201408    B2 | 01 December 2015 |
| | | US    9469211    B2 | 18 October 2016 |
| | | US    9908427    B2 | 06 March 2018 |

Form PCT/ISA/210 (patent family annex) (July 2019)